(19) Europäisches Patentamt
European Patent Office
Office européen des brevets

(11) EP 2 362 287 B1

# (12) EUROPEAN PATENT SPECIFICATION

(45) Date of publication and mention of the grant of the patent:
**20.11.2013 Bulletin 2013/47**

(51) Int Cl.:
***G05B 19/19*** *(2006.01)*

(21) Application number: **11155613.0**

(22) Date of filing: **23.02.2011**

## (54) Motor Control Method and Motor Control System

Motorsteuerverfahren und Motorsteuersystem

Procédé et système de commande de moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2010 JP 2010037129**

(43) Date of publication of application:
**31.08.2011 Bulletin 2011/35**

(73) Proprietor: **Sanyo Denki Co., Ltd.**
**Tokyo 170-8451 (JP)**

(72) Inventor: **Ide, Yuji**
**Tokyo (JP)**

(74) Representative: **Wilson Gunn**
**Blackfriars House**
**The Parsonage**
**5th Floor**
**Manchester M3 2JA (GB)**

(56) References cited:
**EP-A2- 1 968 184**
**US-A- 4 398 138**
**US-A1- 2007 143 040**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to a method of controlling a motor and a motor control system capable of stopping a rotor of a motor at a fixed position.

Description of the Related Art

As to a motor used for driving a main shaft of a working machine, there is known a technique for stopping a rotor of the motor at a desired position. In this technique, the motor is operated under a speed control until the motor speed reaches a certain speed (orientation speed) and, after that, the control mode is switched from the speed control to the position control mode so as to perform position control based on a designated stop position.

FIG. 11 illustrates an example configuration of a conventional motor control system. FIG. 12 is an operation waveform diagram illustrating operation of the conventional motor control system. The position of a rotor of a motor M is detected by a position sensor S such as an encoder. The output of the position sensor S is input to a speed detector SD, and the speed detector SD detects the speed (signal corresponding to the speed) of the rotor based on the output of the position sensor S and outputs the detected speed. In this conventional system, a switch S1 is connected to a terminal a, whereby a deviation between a rotational speed command and the actual rotor speed is input to a speed controller SC, and the speed controller output a torque command to a torque controller TC. Based on the torque command, the torque controller TC output a current command to control the motor M such that the torque of the motor M coincides with the torque command value. In this example, it is assumed that a controller for controlling the motor current in accordance with the current command is implemented in the torque controller. When an orientation speed command is output from an upper or higher-order controller so as to stop the motor, the speed control is performed according to the orientation speed command with the switches S1 and S2 connected to a terminal b and a terminal a, respectively. As a result, as illustrated in FIG. 12, the motor rotational speed is gradually reduced to an orientation speed. In a position control system, a positional deviation between a position command designating a position in one rotation of the motor at which the rotor is to be stopped and the position of the rotor detected by the position sensor S is computed and input to the position controller PC. The position controller PC computes a speed command value from a position loop based on the positional deviation. When the speed command value becomes equal or less than the orientation speed command value, the switch S2 is switched and connected to the terminal b for position control. Afterward, the motor M is position controlled based on the speed command from the position controller PC and, when the position of the rotor of the motor comes to the designated stop position, the motor is stopped. When the motor M is stopped, an orientation completion signal is output and thus fixed-position stop control is completed.

The inertia is changed depending on the type of a tool attached to the main shaft of the working machine, so that when one tool is exchanged for another, fixed-position stop characteristics of the main shaft motor may be changed. However, conventional motor control systems do not have a function of correcting the change of the fixed-position stop characteristics. Thus, conventionally, control parameters have been adjusted so as not to cause overshoot based on a case where the load inertia is large. In such a case, however, when the load inertia is small, time required to achieve the fixed-position stop may increase. An improvement in processing efficiency is essential in a working machine for increased productivity, and thus a reduction in the time required for achieving the fixed-position stop control is strongly demanded. As a method for estimating the inertia, there is a known technique as disclosed in Japanese Pat. Appln. Laid-Open Publication No. 2007-156699 (JP2007-156699A) (Application No. 2005-349266). In this technique, the inertia is estimated from a torque command and an acceleration feedback by using an iterative least squares technique.

However, the above technique estimates the inertia based mainly on information obtained at the acceleration end time or at the deceleration start time, so that several acceleration and deceleration steps are required for convergence of the estimated inertia value, thereby taking a long time for the estimation of the inertia. In a working machine, after a tool attached to the main shaft is exchanged for another, the motor is rotated at high speed for processing and then position control is performed while the motor is being decelerated. By this time, it is necessary to complete the estimation of the inertia value. However, in the conventional inertia estimation method, the estimation of the inertia cannot be achieved in a short time.

US4,398,138 discloses a spindle orientation control apparatus (column 5, line 18 to column 8, line 60). The spindle orientation control apparatus of US4,398,138 is configured to control the rotational speed during steady-state control, to decrease the rotational speed down to the orientation speed when indicated by an orientation command, to then shift to the position control, and then to stop the primary shaft precisely at an indicated position. Embodiments of the present invention provide a method of controlling a motor, and a motor control system, which implements an alternative method of position control.

SUMMARY OF THE INVENTION

An object of the present invention is provided a method of controlling a motor and a motor control system capable of detecting a change in the load inertia of the motor at high speed and achieving the fixed-position stop control at high speed even when the load inertia of the motor is changed.

The present invention provides a method of controlling a motor by using a position controller, a speed controller and a torque controller comprising steps of; computing a deviation between a rotational speed designated by a rotational speed command and rotational speed of a rotor of the motor; inputting the deviation to the speed controller to obtain a torque command; inputting the torque command to the torque controller; performing a speed control so as to control the speed of the motor such that the rotational speed of the rotor coincides with the rotational speed designated by the rotational speed command; and controlling the stop position of the rotor according to a position command to be input to the position controller. The method of the preset invention further comprises steps of computing an acceleration of the rotor, and determining a gain of the position controller based on a maximum value of an absolute value of the acceleration.

According to the present invention, a change of the inertia and a change of the torque constant are estimated based on the maximum value of the absolute value of the acceleration. Thus, it is possible to detect a change of the load inertia of the motor and thereby to perform at high speed even when the load inertia of the motor is changed.

More specifically, in the method according to the present invention, a speed control and an orientation control are performed, and the rotor of the motor is made to stop at a fixed position. In the speed control, a rotational speed of a rotor is controlled such that the rotational speed of the rotor coincides with a commanded speed designated by a rotational speed command, by inputting a deviation between the rotational speed and the commanded speed to a speed controller to obtain a torque command and inputting the torque command to a torque controller. In the orientation control, when an orientation speed command is input, a rotational speed of a rotor is controlled such that the rotational speed of the rotor coincides with an orientation speed, by computing a deviation between the orientation speed designated by the orientation speed command and the speed of the rotor; inputting the deviation to the speed controller to obtain a torque command; and inputting the torque command to the torque controller. After the rotational speed of the rotor has coincided with the orientation speed, a following torque command is input to the torque controller. The torque command is obtained by computing a positional deviation between the position of the rotor and a position designated by the position command designating a position at which the rotor is to be stopped in one rotation thereof; inputting the positional deviation to the position controller to obtain a position loop speed command; squaring the rotational speed and encoding the result of squaring to obtain squared speed; computing a deviation between the position loop speed command and squared speed; and inputting the deviation to the speed controller to obtain the torque command.

Especially, in the present invention, before start of the orientation control, the acceleration of the rotor may be computed, and the gain of the position controller may be determined based on the maximum value of the absolute value of the acceleration.

The present invention is based on the inventor's finding that a change of the inertia and a change of the torque constant can be estimated in association with the acceleration of the motor. Thus, in the present invention, a change of the inertia and a change of the torque constant are estimated based on the maximum value of the absolute value of the acceleration, and the gain of the position controller is determined based on the acceleration of the motor for each orientation control. Further, according to the present invention, in the case where the sliding mode control may be employed, the sliding curve is computed based on the acceleration of the motor, so as to allow the motor to be subjected to the fixed-position stop control according to the computed sliding curve. Thus, even when the load inertia is changed due to a change of the tool to be driven by the motor or even when the torque constant of the motor is changed, stable and high-speed fixed-position stop control according to the load inertia or torque constant of the motor may be realized.

Assuming that the gain is C, the gain C may be computed based on the expression: $C = 2 \times ACCP \times G_0$, where ACCP is the maximum value of the absolute value of the acceleration, and $G_0$ is a constant used for control stabilization. According to the above expression, it is possible to easily compute the gain C of the position controller based on the maximum value of the absolute value of the acceleration determined by the torque that the motor can output and load inertia.

Preferably, an acceleration signal representing the acceleration may be passed through a low-pass filter to remove noise, an absolute value of the acceleration is generated from the noise-removed acceleration signal, and the maximum value ACCP is computed from the absolute value of the acceleration. When the noise is removed using the low-pass filter, it is possible to suppress influence of quantization error of the encoder.

An initial value C1 is set as the gain C in the position controller, the gain C continues to be computed based on the above expression when the motor starts accelerating and is accelerating, and the gain C corresponding to the maximum value of the absolute value of the acceleration is set as the gain of the position controller. Then, preferably the value of the gain of the position controller is set back to the initial value C1 after completion of the orientation control.

With this configuration, even when the load inertia of the motor is changed, the gain C corresponding to the load inertia can be set in the position controller every time the orientation control is performed. Further, it is possible to compensate for a variation of the torque constant of the motor caused when the torque command for obtaining the deceleration torque —T1 is given.

The input to the torque controller may be adjusted so as to perform sliding mode control that controls the position and speed of the rotor according to a sliding curve defined by using physical parameters used for the orientation control so as to stop the rotor at a target position. As a result, smooth and fastest sliding control can be achieved using the position control gain C based on the maximum acceleration determined by the torque that the motor can output and load inertia.

A motor control system of a type that does not perform a sliding mode control according to the present invention includes a speed detector, a position detector, a position loop, a speed command selection section, a speed controller, a speed deviation computation section, a torque controller, a control section, and an automatic tuning section. The speed detector detects the rotational speed of a rotor of a motor and outputs the detected rotational speed. The position detector detects the rotational position of the rotor. The position loop includes a positional deviation computation section and a position controller. The positional deviation computation section computes a positional deviation between a position designated by a position command designating a position at which the rotor is to be stopped in one rotation thereof and the rotational position. The position controller inputs thereto the positional deviation and output a position loop speed command. The speed command selection section selects one of a rotational speed command output from an upper or higher-order controller, an orientation speed command designating an orientation speed, and the position loop speed command. The speed deviation computation section computes a speed deviation between the designated speed designated by one speed command selected by the speed command selection section and rotational speed. The speed controller inputs thereto an output from the speed deviation computation section and outputs a torque command. The torque controller inputs thereto the torque command and outputs a current command. The control section performs control so as to make the speed command selection section select the rotational speed command during steady-state control; so as to make the speed command selection section select the orientation speed command when the motor is stopped, to give a torque command to the torque controller in order to perform the orientation control for the speed of the rotor such that the rotational speed of the rotor coincides with the orientation speed, the torque command being obtained by inputting a deviation between the orientation speed command and rotational speed to the speed controller; and so as to make the speed command selection section select a position loop speed command after the rotational speed of the rotor has coincided with the orientation speed.

The automatic tuning section computes the acceleration of the rotor and determines a gain C of the position controller based on the maximum value of the absolute value of the acceleration before the orientation control.

A motor control system of a type that performs sliding mode control according to the present invention includes a speed detector, an output selection section, a position detector, a position loop, a speed command selection section, a speed deviation computation section, a speed controller, an addition section, a torque controller, a control section , and an automatic tuning section. The speed detector detects the rotational speed of a rotor of a motor and outputs the detected rotational speed and a squared speed obtained by squaring the rotational speed and encoding the result of squaring. The output selection section selects one of the outputs of the speed detector. The position detector detects the rotational position of the rotor. As the speed detector and a detection section (sensor section) of the position detector, a detector having the speed detection function and the position detection function may be used. The position loop includes a positional deviation computation section and a position controller. The positional deviation computation section computes a positional deviation between the rotational position and a position designated by a position command designating a position at which the rotor is to be stopped in one rotation thereof. The position controller inputs thereto the positional deviation and output a position loop speed command. The speed command selection section selects one of a rotational speed command output from an upper controller, an orientation speed command designating orientation speed, and the position loop speed command. The speed deviation computation section computes a speed deviation between the designated speed designated by one speed command selected by the speed command selection section and the rotational speed or the squared speed selected by the output selection section. The speed controller inputs thereto an output from the speed deviation computation section and outputs a torque command. The addition section adds the torque addition command to the torque command and outputs an added torque command. The torque controller inputs thereto the added torque command and outputs a current command. The control section performs control so as to make the output selection section select the rotational speed and speed command selection section select the rotational speed command during steady-state control. When the orientation command is input, the control section performs control so as to make the output selection section select the rotational speed and the speed command selection section select the orientation speed command to give a torque command to the torque controller in order to perform the orientation control for the speed of the rotor such that the rotational speed of the rotor coincides with the orientation speed. The torque command is obtained by inputting a deviation between the orientation speed command and rotational speed to the speed controller. After the rotational speed of the rotor has coincided with the orientation speed, the control section performs control so as to make the output selection section select the squared speed and the speed command selection section select the position loop speed command to give a torque command obtained by inputting a deviation between the speed designated by the position loop speed command and squared speed through the speed controller to the torque controller. The automatic tuning section computes the acceleration of the rotor and determines a gain C of the position controller based on the maximum value of the absolute value of the acceleration before the sliding mode control.

In the motor control system, the control section may adjust the input to the torque controller so as to perform sliding mode control that controls the position and speed of the rotor according to a sliding curve defined by using physical parameters used for the orientation control so as to stop the rotor at a target position. As a result, smooth and fastest sliding control can be achieved using the position control gain C based on the maximum acceleration determined by the torque that the motor can output and load inertia.

BRIEF DESCRIPTION OF THE DRAWINGS

FIG. 1 is a block diagram illustrating a configuration of an embodiment of the present invention capable of detecting a change in the load inertia of a motor at high speed and achieving a fixed-position stop control at high speed even when the load inertia of the motor is changed.
FIG. 2 is a view illustrating an operation waveform for explaining the operating state of an embodiment of FIG. 1.
FIG. 3 is a view illustrating an example of a sliding curve changed in accordance with the load inertia.
FIGS. 4A to 4G are simulation results of fixed-position stop control in the case where the load inertia is small.
FIGS. 5A to 5G are simulation results of fixed-position stop control in the case where the load inertia is large.
FIG. 6 is a block diagram illustrating a configuration of a second embodiment of the motor control system according to the present invention.
FIG. 7 is a view illustrating an operation waveform for explaining the operating state of an embodiment of FIG. 6.
FIG. 8 is a view illustrating an example of the relationship between acceleration and position control gain.
FIG. 9A to 9F are views illustrating simulation results of fixed-position stop control in the case where the load inertia is small in the embodiment of FIG. 6.
FIGS. 10A to 10F are views illustrating simulation results of fixed-position stop control in the case where the load inertia is large in the embodiment of FIG. 6.
FIG. 11 is a block diagram illustrating an example of a configuration of a conventional motor control system.
FIG. 12 is an operation waveform diagram illustrating operation of the conventional motor control system.

DESCRIPTION OF THE PREFERRED EMBODIMENTS

Embodiments of the present invention will be described in detail below with reference to the accompanying drawings. FIG. 1 is a block diagram illustrating a configuration of a motor control system 11 that performs a motor control method according to the present invention capable of detecting a change in the load inertia of a motor at high speed and achieving a fixed-position stop control at high speed even when the load inertia of the motor is changed. FIG. 2 is a view illustrating an operation waveform for explaining the operation state of an embodiment of FIG. 1. FIG. 3 is a view for explaining sliding mode control. FIGS. 4A to 4G are simulation results of fixed-position stop control in the case where the load inertia is small. FIGS. 5A to 5G are simulation results of fixed-position stop control in the case where the load inertia is large. The motor control system 11 according to the present embodiment includes a speed detector 12, an encoder 13 constituting a position detector, a speed controller 14, a position controller 15, a torque controller 16, a control section 17, a first selection section SW1, a second selection section SW2, a positional deviation computation section SB1, a speed deviation computation section SB2, and addition section AD. In the present embodiment, the first selection section SW1 constitutes an output selection section, and the second selection section SW2 constitutes a speed command selection section. The speed detector 12 detects the rotational speed of a rotor of a motor M based on an output from the encoder 13 and outputs a rotational speed v and a squared speed v [refer to FIG. 4D and FIG. 5D] obtained by squaring the rotational speed and encoding the result. The first selection section SW1 selects an output of the speed detector 12 based on a command from the control section 17 to be described later. The encoder 13 constituting a position detector detects the rotational position of a rotor of the motor M. In the present embodiment, the encoder 13 is used as a detection section (sensor section) of the speed detector 12. The positional deviation computation section SB1 computes a positional deviation d1 [refer to FIG. 4G and FIG. 5G] between a position designated by a position command pc [refer to FIG. 4B and FIG. 5B] designating a position at which the rotor is to be stopped in one rotation thereof and a rotational position p [FIG. 4C and 5C] output from the encoder 13. The position command pc is output from a not illustrated an upper or higher-order controller. The position controller 15 inputs thereto the positional deviation d1 and outputs a position loop speed command vc. In the present embodiment, a loop including the positional deviation computation section SB1 and position controller 15 constitutes the position loop.

The second selection section SW2 switches contacts S1 and S2 according to a switching command from the control section 17 so as to select one of a rotational speed command rsc [refer to FIG. 4E and FIG. 5E] output from the not illustrated higher-order controller, an orientation speed command oc [refer to FIG. 4A and FIG. 5A] to achieve orientation speed, and a position loop speed command vc. The speed deviation computation section SB2 computes a speed deviation d2 between the designated speed designated by one speed command selected by the second selection section SW2 and rotational speed v or squared speed v [refer to FIG. 4D and FIG. 5D] selected by the first selection section SW1.

The speed controller 14 inputs thereto the output (d2) of the speed deviation computation section SB2 and generates a torque command tc. The addition section AD adds a torque addition command ac [refer to FIG. 4F and FIG. 5F] to the torque command tc so as to generate and output an added torque command atc. The torque controller 16 inputs thereto the added torque command atc and outputs a current command ic. The current command ic is input to a motor drive section, based on which the motor M is drive controlled.

During steady-state control during which the motor M is operated based on the rotational speed command rsc output from the not illustrated higher-order controller, the control section 17 outputs the switching command to the first selection section SW1 such that the contact S3 of the first selection section SW1 selects the rotational speed v and outputs the switching command to the second selection section SW2 such that the contact S1 of the second selection section SW2 selects the rotational speed command rsc. The speed deviation computation section SB2 outputs to the speed controller 14 the speed deviation d2 between the rotational speed designated by the rotational speed command rsc and rotational speed v output from the speed detector 12. At this time, the addition section AD does not perform addition but outputs, without change, the torque command tc output from the speed controller 14 to the torque controller 16. Thus, during the steady-state control, speed control is performed according to the rotational speed command rsc from the upper controller.

When stopping the motor M at a fixed position, the control section 17 outputs, for changing to orientation control, the switching commands to the first selection section SW1 and second selection section SW2 such that the contact S3 of the first selection section SW1 selects the rotational speed v and contacts S1 and S2 of the second selection section SW2 select the orientation speed command oc, Then, the speed deviation computation section SB2 outputs to the speed controller 14 the speed deviation d2 between the orientation speed designated by the orientation speed command oc and rotational speed v output from the speed detector 12. At this time, the addition section AD does not perform addition but outputs, without change, the torque command tc output from the speed controller 14 to the torque controller 16. Thus, during the orientation control, the rotational speed is gradually reduced to the orientation speed designated by the orientation speed command oc from the upper controller.

After the rotational speed of the rotor has been reduced to the orientation speed, the control section 17 outputs the switching command to the first selection section SW1 such that the contact S3 of the first selection section SW1 selects the squared speed $v^2$ and outputs the switching command to the second selection section SW2 such that the contacts S1 and S2 of the second selection section SW2 selects the position loop speed command vc. The speed deviation computation section SB2 outputs to the speed controller 14 a deviation between the speed designated by the position loop speed command vc and the squared speed $v^2$ output from the speed detector 12. At this time, the addition section AD adds the torque addition command ac determined by the control section 17 to the torque command tc output from the speed controller 14 and gives the obtained added torque command atc to the torque controller 16.

In the present embodiment, the input to the torque controller 16 is adjusted so as to perform sliding mode control. In the present embodiment, the position and speed of the rotor are controlled according to a sliding curve defined by using physical parameters used for the orientation control so as to stop the rotor at a target position. The sliding curve, which is used for generating the torque command to be input to the torque controller 16, is defined by using physical parameters used for the control and used in a function representing any of the physical parameters so as to achieve the sliding mode control.

In the present embodiment, the sliding curve is used in a function for obtaining the torque addition command ac to be added to the torque command tc output from the speed controller 14. The sliding curve to be used in this case is defined so as to satisfy the following two conditions. The first condition is that when the positional deviation d1 is larger than a preset value, a gain C of the position controller 15 is set to a value proportional to a deceleration torque T and inversely proportional to an inertia J of the motor, and the added torque command atc obtained by adding the torque addition command ac for obtaining a torque having a value obtained by subtracting a control margin from the maximum torque of the motor M to the torque command tc is given to the torque controller 16. The second condition is that when the positional deviation d1 is smaller than a preset value, the torque addition command ac is set to zero or a value [refer to FIG. 4F] close to zero, and the gain C of the position controller 15 is set to a value that compensates for a steady-state deviation. In the present embodiment, the torque addition command ac is output from the control section 17. Therefore, the control section 17 incorporates the sliding curve that satisfies the above two conditions as a control curve, and the torque addition command ac is output according to the control curve.

The sliding mode control used in the present embodiment will be described more in detail. In the sliding mode control used in the present embodiment, the sliding curve is set assuming that a deceleration torque is constant, and the position and the speed of the motor are controlled so as to follow the set sliding curve. Assuming that the constant deceleration torque is set to -T1, the motion equation of the motor that is being decelerated can be represented as follows:

$$J \cdot d\Delta v/dt - T1 = 0 \cdots\cdots (1)$$

where J is inertia of the motor, $\Delta v$ is speed deviation. Assuming that the positional deviation is $\Delta x$, $\Delta v = d\Delta x/dt$ is satisfied, so that the expression (1) can be represented as follows:

$$C1\Delta x - \Delta v^2 = 0 \cdots\cdots (2)$$

where C1 = 2 (T1/J) is satisfied. Thus, a sliding curve S can be represented as follows:

$$S = C\Delta x \pm v^2 \cdots\cdots (3)$$

where $v^2$ is added ("+") when $v<0$, and $v^2$ is subtracted ("-") when $v \geq 0$.

Further, in the above expression (3), when $\Delta x > x_0$ is satisfied, C = 2 (T1/J) is satisfied, and when $\Delta x \leq x_0$ is satisfied, $C = C_0$ is satisfied. Here, $X_0$ [refer to FIG. 4A] is a preset value corresponding to a position close to the target position. $C_0$ is a minute value for compensating for the steady-state deviation. Until the positional deviation $\Delta x$ reaches the vicinity of the present value $X_0$ corresponding to the target position, the deceleration torque -T1 is a center of the sliding mode control. After the positional deviation $\Delta x$ becomes the present value $X_0$ or less, the deceleration torque becomes zero, so that the value of C becomes mathematically zero. In the present embodiment, C is set to the minute value $C_0$ as compensation for the steady-state deviation. Thus, the added torque command atc can be represented as follows:

$$Tcmd = T + KS \cdots\cdots (4)$$

That is, $Tcmd = T+KS = T+K (C\Delta x \pm v^2)$ is satisfied. In the above expression (4), when $\Delta x > x_0$ is satisfied, T = -T1 is satisfied, and when $\Delta x \leq x_0$ is satisfied, T = 0 is satisfied. K is a constant.

FIG. 3 illustrates the sliding curve used in the control of the present embodiment. In the present embodiment, two sliding curves corresponding to different two load inertias are employed. When the load inertia becomes small, the inclination angle or slope of the sliding curve becomes large or steep, while when the load inertia becomes large, the inclination angle or slope of the sliding curve becomes small or less steep. Further, as illustrated in FIG. 3, when the sliding mode control is performed, the rotor of the motor is slid to a stop position according to the sliding curve. After the rotor has been stopped at the target position, the control section 17 outputs the orientation completion signal to the upper controller.

In the present embodiment, a sliding mode control system and a conventional motor control system are compared so as to relate the physical parameters thereof to each other as follows. Therefore, it is possible to apply the sliding mode control to the existing motor control system without significantly changing the configuration of the existing motor control system.

· Parameter T is set as torque addition amount

· Parameter C is set as gain of position controller 15

· Parameter $\Delta x$ is set as positional deviation

· Parameter K is set as gain of speed controller 14

· Parameter $\pm v^2$ is set as squared speed

Thus, the control can be performed with the parameters for the sliding mode control related to the physical parameters that have been used in the conventional control system, such as the gain of the position controller 15, the positional deviation, and the torque addition.

In the case where the rotor of the motor deviates from the vicinity of the target position, it is preferable that the torque addition T1 be set as T1 = maximum torque of motor x 90%, and the gain C of the position controller 15 be set as C = 2(T1/J).

Where J is the inertia of the motor and a mechanical system, and K is the gain of the speed controller 14. The torque addition T1 is set to 90% of the maximum torque, with a 10% control margin assured, so that it is possible to drive the motor with as large a torques as possible. The speed controller 14 is configured to perform proportional control so as to achieve operation according to the sliding curve. As the speed control gain K, an optimum value is obtained through experiments.

When the positional deviation becomes small and reaches to the value $x_0$ corresponding to a position close to the target position, the torque addition T, gain C of the position controller 15, and gain K of the speed controller 14 are set as follows:

$T = C_0$,
$C = C_0$, and
$K = K_0$

As the $C_0$ and $K_0$, values required to suppress the steady-state deviation to prevent occurrence of positioning error are previously defined through experiments. In this case, the speed controller 14 is preferably configured to perform proportional-integral control. The configuration of the speed controller 14 may previously be set so as to allow this setting change to be made based on a command from the control section 17. In the case where the control system is realized by software, this setting change can easily be achieved by a program. With such a configuration, the fixed-position stop control can be performed while suppressing the steady-state deviation so as to prevent occurrence of positioning error.

As illustrated in FIG. 2, after the control mode is changed to the sliding mode control, the speed command is limited to not more than a speed limiting command value from the upper controller, and the torque command is limited to 90% from the time slightly before the orientation speed is reached until the time when the control mode is changed to the sliding mode control. At this time, the speed controller 14 is assumed to perform the proportional-integral control. Then, from the time when the control mode is changed to the sliding mode control to the time when the positional deviation reaches to the vicinity of the target position, a torque command in the acceleration direction is limited to 0% while a torque command in the deceleration direction is set to 100% so that the motor speed does not exceed the orientation speed. At this time, the speed controller 14 performs the proportional control. From the time slightly before the stop, the torque limitation is set back to 100% and then, the speed controller 14 performs the proportional-integral control. By limiting the speed command and torque limitation, it is possible to make the operation of the sliding mode control smooth. After the motor has stopped, the control section 17 outputs the orientation completion signal to the upper controller.

The position command pc at the time point when the control mode is changed to the sliding mode control is computed as follows.

First, a minimum n that satisfies the following two expressions are computed:

$n \geq$ ((squared speed)/(gain of position controller) + position feedback - positional shift amount) / ($2\pi$xa)
$n <$ ((squared speed)/(gain of position controller) + position feedback - positional shift amount) / ($2\pi$xa) + 1

where a is an encoder pulse resolution per one rotation of the rotor. Then, the position command pc is defined as follows:

position command pc = n x $2\pi$ + positional shift amount

By giving such a position command, it is possible to achieve positioning to a position within one rotation of the motor in the shortest time. According to the above expression, the position command PC is output from the not illustrated upper controller.

The control system 11 according to the present embodiment further includes an automatic tuning section 18. During the orientation control, the automatic tuning section 18 computes acceleration and determines the gain C of the position controller 15 based on the maximum value of the acceleration. For example, in a state where tool exchange is completed, the contact S1 of the second selection section SW2 is connected to a terminal a, and the contact S3 of the first selection section SW1 is connected to a terminal a. Accordingly, the deviation d2 between the rotational speed command rsc and speed v is given to the speed controller 14, and the torque command tc is given from the speed controller 14 to the torque controller 16. The rotational speed of the motor M is controlled so as to conform to the rotational speed command rsc. In the present embodiment, when the motor M starts to rotate, an acceleration computation section 19 computes acceleration based on the position information of the rotor of the motor M output from the encoder 13. The acceleration signal computed by the acceleration computation section 19 is given to a low-pass filter 20 for noise removal. The noise-removed acceleration signal is input to an absolute value computation section 21 for generating an absolute value of the acceleration. The acceleration represented as an absolute value (acceleration magnitude) is input to a maximum value computation section 22. The maximum value computation section 22 computes the maximum value ACCP of the input acceleration magnitude and inputs the computed maximum value ACCP of the acceleration magnitude to a position control gain computation section 23. The position control gain computation section 23 computes the position control gain C based on the maximum value ACCP. The computed position control gain C is input to the position controller 15.

In the present embodiment, the position control gain computation section 23 computes the position control gain C based on the following expression:

$$C = 2 \times ACCP \times G_0 \quad \cdots\cdots \quad (5)$$

where $G_0$ is a constant used for control stabilization. The constant $G_0$ can be computed through simulations or experiments. Incidentally, $G_0$ obtained when time charts illustrated in FIGS. 4A to 4G are simulated was 0.8. The initial value C1 of the position control gain C is set, through experiments or the like, to a value that can maintain stability. Then, when the motor starts accelerating, the position control gain C continues to be compute and, based on the maximum absolute value of the acceleration, the position control gain C at that time is set. By using the position control gain C based on the maximum acceleration determined by the torque that the motor can output and load inertia, smooth and fastest sliding control can be achieved. When the orientation completion command is output, the value of the position control gain C is set back to the initial value C1.

As described above, in the present embodiment, when the motor is decelerated at the deceleration torque -T1, the value of the position control gain C corresponding to the load inertia at each time step can be computed. As a result, even when the load inertia of the motor is changed, the automatic tuning section 18 computes a position control gain corresponding to the changed load inertia, so that the abovementioned sliding curve is also changed in accordance with the load inertia. Further, according to the present embodiment, it is possible to compensate for a variation of the torque constant of the motor caused when the torque command for obtaining the deceleration torque -T1 is given. Further, as is clear from FIGS. 4 and 5, it is possible to realize stable and high-speed positioning even when the load inertia is changed.

The gain K of the speed controller 14 may be made to change in accordance with a change of the gain C of the position controller 15.

According to the present embodiment, estimation of the inertia, including estimation of the torque, is handled as the acceleration of the motor. Then, every time the fixed-position stop control is performed, the sliding curve is computed based on the acceleration of the motor, and the fixed-position stop control of the motor is performed according to the computed sliding curve. Thus, even when the load inertia is changed due to a change of the tool to be driven by the motor or even when the torque constant of the motor is changed, stable and high-speed fixed-position stop control according to the load inertia or torque constant of the motor can be realized.

FIG. 6 is a block diagram illustrating a configuration of a second embodiment of the motor control system according to the present invention. In FIG. 6, reference numerals obtained by adding 100 to the reference numerals in FIG. 1 are given to the elements which are the same as those in FIG. 1. Unlike the first embodiment, the sliding mode control is not performed in the second embodiment. Thus, the second embodiment differs from the first embodiment in that the torque addition command is not added to the torque command tc, the speed detector 112 does not output the squared speed $v^2$ but only outputs the rotational speed v, and the first selection section SW1 is not provided. In the second embodiment, in a state where tool exchange is completed, the contact S1 of the second selection section SW2 is connected to a terminal a. Accordingly, the deviation d2 between the rotational speed command rsc and speed v is given to the speed controller 114, and the torque command tc is given from the speed controller 114 to the torque controller 116. The rotational speed of the motor M is controlled so as to conform to the rotational speed command rsc. When receiving the rotational speed command rsc, the motor M accelerates and rotates at the speed designated by the rotational speed command rsc as illustrated in FIG. 7. When the motor M starts to rotate, the acceleration computation section 119 computes acceleration based on the position information of the rotor of the motor M output from the encoder 113. The acceleration signal computed by the acceleration computation section 119 is given to the low-pass filter 120 for noise removal. The noise-removed acceleration signal is input to the absolute value computation section 121 for generating an absolute value of the acceleration. The acceleration magnitude represented for generating the absolute value is input to the maximum value computation section 122. The maximum value computation section 122 computes the maximum value ACCP of the input acceleration magnitude and inputs the compute maximum value ACCP of the acceleration magnitude to the position control gain computation section 123. The position control gain computation section 123 computes the position control gain C based on the maximum value ACCP. The computed position control gain C is set in the position controller 115.

When the orientation command is output, the switch S1 of the second selection SW2 is connected to the terminal b, and switch S2 of the second selection section SW3 is connected to the terminal a, whereby speed control is performed under the orientation speed command oc. As a result, the motor rotational speed is gradually reduced to the orientation speed. The position controller 115 computes the positional deviation d1 between a position p and the position command pc designating a position in one rotation of the motor at which the rotor is to be stopped and then computes the speed command vc from the position loop through the position controller 15. When the speed command vc from the position loop becomes equal to or less than the orientation speed command oc, the switch S2 of the second selection section SW2 is connected the terminal b for position control, and the motor is stopped at the designated stop position. When the motor is stopped, the orientation completion signal is output and thus fixed-position stop control is completed.

The relation between the acceleration of the motor M and the position control gain C may previously be obtained through experiments, stored in the position control gain computation section 123 as data approximated to a given function, and read out in accordance with the acceleration. FIG. 8 illustrates an example of the relationship between the acceleration and the position control gain C. According to the present embodiment, even when the load inertia of the motor M is changed, the position control gain C corresponding to the changed load inertia is automatically selected. Thus, the orientation is performed with the torque that the motor can output and the position control gain based on the maximum acceleration determined by the load inertia. Then, when the orientation is completed, the value of the position control gain C is set back to the initial value.

FIGS. 9A to 9F illustrate simulation results of the fixed-position stop control in the case where the load inertia is small in the embodiment of FIG. 6. FIGS. 10A to 10F illustrate simulation results of the fixed-position stop control in the case where the load inertia is large. As is clear from FIGS. 9 and 10, even when the load inertia is changed, stable and high-speed positioning can be realized. The gain of the speed controller 114 may be made to change in accordance with a change of the gain of the position controller 115.

As a matter of course, all of the main parts in the first and second embodiments may be realized by software.

According to the present invention, the change of the inertia and the change of the torque constant are estimated based on the maximum value of the absolute value of the acceleration, and the gain of the position controller is determined based on the acceleration of the motor for each orientation control. Further, in the case where the sliding mode control is employed, the sliding curve is computed based on the physical parameters used in the orientation control so as to allow the motor to be subjected to the fixed-position stop control according to the computed sliding curve. Thus, even when the load inertia is changed due to a change of the tool to be driven by the motor or even when the torque constant of the motor is changed, stable and high-speed fixed-position stop control according to the load inertia or torque constant of the motor can be realized.

## Claims

**1.** A method of controlling a motor by using a speed detector (12), a position detector (13), a position controller (15), a speed controller (14), a torque controller (16) and a control section (17), the method comprising the steps of;
detecting by using the speed detector (12) a rotational speed (v) of a rotor of a motor and outputting the rotational speed (v);
detecting by using the position detector (13) a rotational position (p) of the rotor;
outputting by using the position controller (15) a position loop speed command (vc); wherein the position controller (15) receives as an input a positional deviation (d1) between the rotational position (p) and a position designated by a position command (pc) designating a position at which the rotor is to be stopped in one rotation thereof; outputting command
outputting by using the speed controller (14) a torque command (tc) to the torque controller (16), wherein the speed controller (14) receives as an input a speed deviation (d2) between the rotational speed (v) and a speed designated by one of a rotational speed command (rsc) output from an upper controller, an orientation speed command (oc) designating an orientation speed, and the position loop speed command (vc);
outputting by using the torque controller (16) a current command (ic); and
controlling by using the control section (17) a motor such that the rotational speed command (rsc) is selected during steady-state control; when the motor is stopped, the orientation speed command (oc) is selected to give a torque command (tc) to the torque controller (16) in order to perform an orientation control for the speed of the rotor such that the rotational speed (v) of the rotor coincides with the orientation speed, the torque command (tc) being obtained by inputting a deviation between the orientation speed command (oc) and rotational speed (v) to the speed controller (14); and the position loop speed command (vc) is selected after the rotational speed (v) of the rotor has coincided with the orientation speed, **characterized in that**:

the method further uses an automatic tuning section (18) and comprises the step of :

computing by using the automatic tuning section (18) an acceleration of the rotor, and determining a gain (C) of the position controller (15) based on a maximum value of an absolute value of the acceleration before the orientation control.

**2.** The method of controlling a motor according to claim 1, further comprising the steps of:

performing an orientation control of the rotational speed (v) of the rotor such that the rotational speed (v) of the rotor coincides with an orientation speed when the orientation speed command (oc) is input, by computing a deviation between the orientation speed designated by the orientation speed command (oc) and the speed of the rotor; inputting the deviation to the speed controller (14) to obtain a torque command (tc); and inputting the torque command (tc) to the torque controller (16) ; and
inputting a torque command (tc) to the torque controller (16), after the rotational speed (v) of the rotor has coincided with the orientation speed, the torque command (tc) being obtained by computing a positional deviation (d1) between the position of the rotor and a position designated by the position command (pc) designating a position at which the rotor is to be stopped in one rotation thereof; inputting the positional deviation (d1) to the position controller (15) to obtain a position loop speed command (vc) ; squaring the rotational speed (v) and encoding the result of squaring to obtain squared speed ($v^2$); computing a deviation between the position loop speed command (vc) and the squared speed ($v^2$) ; and inputting the deviation to the speed controller (14) to obtain the torque command (tc).

**3.** The method of controlling a motor according to claim 2, wherein
assuming that the gain is C, the gain C is compute d based on the expression: $C=2\times ACCP\times G_0$, where ACCP is a maximum value of an absolute value of the acceleration, and $G_0$ is a constant used for control stabilization.

**4.** The method of controlling a motor according to claim 3, wherein
an acceleration signal representing the acceleration is passed through a low-pass filter (20) to remove noise, an absolute value of the acceleration is generated from the noise-removed acceleration signal, and the maximum value ACCP is computed from the absolute value of the acceleration.

**5.** The method of controlling a motor according to claim 4, wherein;
an initial value C1 is set as the gain C in the position controller (15);
the gain C continues to be computed based on the expression when the motor starts accelerating and is accelerating;
the gain C corresponding to the maximum value of the absolute value of the acceleration is set as the gain (C) of the position controller (15); and
the value of the gain (C) of the position controller (15) is set back to the initial value C1 after completion of the orientation control.

**6.** The method of controlling a motor according to claims 2, further comprising the step of performing a sliding mode control by adjusting the input to the torque controller (16), the sliding mode control controlling the position and speed of the rotor according to a sliding curve defined by using physical parameters used for the orientation control so as to stop the rotor at a target position.

**7.** A motor control system comprising:

a speed detector (12) configured to detect a rotational speed (v) of a rotor of a motor and outputs the rotational speed (v);
a position detector (13) configured to detect the rotational position (p) of the rotor;
a position loop including a positional deviation computation section (SB1) and a position controller (15), the positional deviation computation section (SB1) being configured to compute a positional deviation (d1) between a position designated by a position command (pc) designating a position at which the rotor is to be stopped in one rotation thereof and the rotational position (p), and the position controller (15) being configured to input thereto the positional deviation (d1) and output a position loop speed command (vc);

a speed command selection section (SW2) configured to select one of a rotational speed command (rsc) output from an upper controller, an orientation speed command (oc) designating an orientation speed, and the position loop speed command (vc) ;
a speed deviation computation section (SB2) configured to compute a speed deviation (d2) between the rotational speed (v) and the commanded speed designated by the speed command selected by the speed command selection section (SW2);
a speed controller (14) configured to input thereto an output from the speed deviation computation section (SB2) and outputs a torque command (tc);
a torque controller (16) configured to receive the torque command (tc) as an input and output a current command (ic);
a control Section (17) configured to perform control so as to make the speed command selection section (SW2) select the rotational speed command (rsc) during steady-state control; so as to make the speed command selection section (SW2) select the orientation speed command (oc), when the motor is stopped, to give a torque command (tc) to the torque controller (16) in order to perform the orientation control for the speed of the rotor such that the rotational speed (v) of the rotor coincides with the orientation speed, the torque command (tc) being obtained by inputting a deviation between the orientation speed command (oc) and rotational speed (v) to the speed controller (14); and so as to make the speed command selection section (SW2) select a position loop speed command (vc) after the rotational speed (v) of the rotor has coincided with the orientation speed; and
**characterized by** an automatic tuning section (18) configured to compute the acceleration of the rotor and determine a gain (C) of the position controller (15) based on a maximum value of an absolute value of the acceleration before the orientation control.

**8.** The motor control system according to claim 7, wherein:

the speed detector (12) is configured to be able to output a squared speed ($v^2$) corresponding to the square of the rotational speed (v); and
the motor control system further comprises:

an output selection section (SW1) configured to select the rotational speed (v) as an output of the speed detector (12) during the steady-state control and when the motor is stopped and select the squared speed ($v^2$) as an output of the speed detector (12) after the rotational speed (v) of the rotor has coincided with the orientation speed; and
an addition section (AD) configured to add a torque addition command (ac) to the torque command (tc) and outputs an added torque command (atc), wherein:

the speed deviation computation section (SB2) is further configured to compute a speed deviation (d2) between the squared speed ($v^2$) and the speed command designated by one speed command selected by the speed command selection section (SW2) and output the computed speed deviation (d2) when the output selection section (SW1) selects the squared speed ($v^2$) ; and
the torque controller (16) inputs thereto the added torque command (atc) and outputs the current command (ic).

**9.** The motor control system according to claim 8, wherein assuming that the gain is C, the automatic tuning section (18) computes the gain C based on the expression: $C = 2 \times ACCP \times G_0$, where ACCP is a maximum value of an absolute value of the acceleration, and $G_0$ is a constant used for control stabilization.

**10.** The motor control system according to claim 9, wherein the automatic tuning section (18) comprises:

a low-pass filter (20) that removes noise from an acceleration signal representing the acceleration;
an absolute value computation section (21) configured to generate the absolute value of the acceleration signal whose noise has been removed by the low-pass filter (20) ;
a maximum value computation section (22) configured to compute the maximum value ACCP of the absolute value of the acceleration; and
a position control gain computation section (23) configured to compute the gain based on the maximum value.

**11.** The motor control system according to claim 10, wherein
when the motor starts accelerating, the position control gain computation section (23) continues to compute the gain C according to the above expression, sets an initial value C1 as the gain C in the position controller (15), then sets, when the maximum value computation section (22) computes the maximum value, the gain C corresponding to the maximum value as the gain (C) of the position controller (15), and sets back the value of the gain (C) of the position controller (15) to the initial value C1 after completion of the orientation control.

**12.** The motor control system according to claim 8, wherein the control section (17) adjusts the input to the torque controller (16) so as to perform sliding mode control that controls the position and speed of the rotor according to a sliding curve defined by using physical parameters used for the orientation control so as to stop the rotor at a target position.

## Patentansprüche

**1.** Verfahren zur Steuerung eines Motors unter Verwendung eines Geschwindigkeitsdetektors (12), eines Positionsdetektors (13), eines Positions-Controllers (15), eines Geschwindigkeits-Controllers (14), eines Drehmoment-Controllers (16) und eines Steuerabschnittes (17), wobei das Verfahren die Schritte aufweist;
detektieren einer Rotationsgeschwindigkeit (v) eines Rotors eines Motors unter Verwendung des Geschwindigkeitsdetektors (12) und Ausgabe der Rotationsgeschwindigkeit (v);
detektieren einer Rotationsposition (p) des Rotors unter Verwendung des Positionsdetektors (13);
Ausgabe eines Positionsschleifen-Geschwindigkeitsbefehls (vc) unter Verwendung des Positions-Controllers (15);
wobei der Positions-Controller (15) als Eingabe eine Positionsabweichung (d1) zwischen der Rotationsposition (p) und einer Position erhält, die durch einen Positionsbefehl (pc) bestimmt ist, um eine Position zu kennzeichnen, bei welcher der Rotor in einer Rotation gestoppt wird;
Ausgabe eines Drehmoment-Befehls (tc) unter Verwendung des Geschwindigkeits-Controllers (14) an den Drehmoment-Controller (16), wobei der Geschwindigkeits-Controller (14) als eine Eingabe eine Geschwindigkeitsabweichung (d2) zwischen der Rotationsgeschwindigkeit (v) und einer Geschwindigkeit erhält, welche durch eine Ausgabe eines Rotationsgeschwindigkeits-Befehles (rsc) von einem übergeordneten Controller, eines Orientierungsgeschwindigkeits-Befehl (oc), der eine Orientierungsgeschwindigkeit kennzeichnet, und des Positions-schleifen-Geschwindigkeitsbefehl (vc) bestimmt wird;
Ausgabe eines Strom-Befehls (ic) unter Verwendung des Drehmoment-Controllers (16); und
Steuerung eines Motors unter Verwendung des Steuerabschnitts (17) derart, dass der Rotationsgeschwindigkeits-Befehl (rsc) während der stabilen Zustandskontrolle ausgewählt wird;
wenn der Motor gestoppt ist, wird der Orientierungsgeschwindigkeits-Befehl (oc) ausgewählt, um einen Drehmoment-Befehl (tc) an den Drehmoment-Controller (16) zu geben, um eine Orientierungssteuerung für die Geschwindigkeit des Rotors auszuführen derart, dass die Rotationsgeschwindigkeit (v) des Rotors mit der Orientierungsgeschwindigkeit übereinstimmt, wobei der Drehmoment-Befehl (tc) durch Eingabe einer Abweichung zwischen dem Orientierungsgeschwindigkeits-Befehl (oc) und der Rotationsgeschwindigkeit (v) an den Geschwindigkeits-Controller (14) erhalten wird,
und der Positionsschleifen-Geschwindigkeitsbefehl (vc) wird ausgewählt, nachdem die Rotationsgeschwindigkeit (v) des Rotors mit der Orientierungsgeschwindigkeit übereinstimmt,
**dadurch gekennzeichnet,**
**dass** das Verfahren weiterhin einen automatischen Tuning-Abschnitt (18) verwendet und den Schritt aufweist,
**dass** eine Beschleunigung des Rotors unter Verwendung des automatischen Tuning-Abschnittes (18) berechnet wird, und eine Verstärkung (C) des Positions-Controllers (15) bestimmt wird, die auf einem Maximalwert eines absoluten Wertes der Beschleunigung vor der Orientierungssteuerung basiert.

**2.** Verfahren zur Steuerung eines Motors nach Anspruch 1, mit den weiteren Schritten,
durchführen einer Orientierungssteuerung der Rotationsgeschwindigkeit (v) des Rotors derart, dass die Rotationsgeschwindigkeit (v) des Rotors mit einer Orientierungsgeschwindigkeit übereinstimmt, wenn der Orientierungsgeschwindigkeits-Befehl (oc) ausgegeben wird, durch Berechnen einer Abweichung zwischen der Orientierungsgeschwindigkeit, welche durch den Orientierungsgeschwindigkeits-Befehl (oc) bestimmt wird und der Geschwindigkeit des Rotors;
Eingabe der Abweichung an den Geschwindigkeits-Controller (14), um einen Drehmoment-Befehl (tc) zu erhalten; und
Eingabe des Drehmoment-Befehles (tc) an den Drehmoment-Controller (16); und Eingabe eines Drehmoment-Befehls (tc) an den Drehmoment-Controller (16), nachdem die Rotationsgeschwindigkeit (v) des Rotors mit der Orientierungsgeschwindigkeit übereinstimmt, wobei der Drehmoment-Befehl (tc) durch Berechnen einer Positionsabweichung (d1) zwischen der Position des Rotors und einer Position, die durch den Positionsbefehl (pc) bestimmt wird, um eine Position, bei welcher der Rotor in einer Rotation gestoppt werden soll, bestimmt wird;
Eingabe der Positionsabweichung (d1) an den Positions-Controller (15), um einen Positionsschleifen-Geschwindigkeitsbefehl (vc) zu erhalten; Quadrierung der Rotationsgeschwindigkeit (v) und Codierung des Ergebnisses des Quadrierens, um eine quadrierte Geschwindigkeit ($v^2$) zu erhalten; Berechnung einer Abweichung zwischen dem Positionszyklus-Geschwindigkeitsbefehl (vc) und der quadrierten Geschwindigkeit ($v^2$); und Eingabe der Abweichung an den Geschwindigkeits-Controller (14), um den Drehmoment-Befehl (tc) zu erhalten.

**3.** Verfahren zur Steuerung eines Motors nach Anspruch 2,
wobei unter der Annahme, dass die Verstärkung C ist, die Verstärkung C auf der Basis der Formel: $C = 2xACCPxG_0$ berechnet wird, worin ACCP ein Maximalwert eines Absolutwertes der Beschleunigung ist und $G_0$ eine Konstante ist, die zur Steuerungsstabilisierung verwendet wird.

**4.** Verfahren zur Steuerung eines Motors nach Anspruch 3,
wobei ein Beschleunigungssignal, welches die Beschleunigung repräsentiert, über ein Tiefpass-Filter (20) geführt wird, um Störungen zu entfernen,
ein Absolutwert der Beschleunigung aus dem störungsbeseitigten Beschleunigungssignal generiert wird, und der Maximalwert ACCP aus dem Absolutwert der Beschleunigung berechnet wird.

**5.** Verfahren zur Steuerung eines Motors nach Anspruch 4,
wobei ein Anfangswert C1 als Verstärkungsgrad C im Positions-Controller (15) gesetzt wird;
der Verstärkungsgrad C wird fortlaufend auf der Basis der Formel berechnet, wenn der Motor zu beschleunigen beginnt und beschleunigt;
der Verstärkungsgrad C, der dem Maximalwert des absoluten Wertes der Beschleunigung entspricht, wird als Verstärkungsgrad (C) des Positions-Controllers (15) festgelegt; und
der Wert des Verstärkungsgrades (C) des Positions-Controllers (15) wird nach Vollendung der Orientierungssteuerung auf den Anfangswert C1 zurückgesetzt.

**6.** Verfahren zur Steuerung eines Motors nach Anspruch 2,
des Weiteren mit dem Schritt der Durchführung einer gleitenden Modus-Steuerung durch Regelung der Eingabe zum Drehmoment-Controller (16), wobei die gleitende Modus-Steuerung die Position und die Geschwindigkeit des Motors entsprechend einer Gleit-Kurve steuert, die durch die Verwendung physikalischer Parameter, welche für die Orientierungssteuerung verwendet werden, bestimmt wird, derart, um den Motor in einer Zielposition zu stoppen.

**7.** Motor-Steuerungssystem mit:

einem Geschwindigkeits-Detektor (12), der derart konfiguriert ist, um eine Rotationsgeschwindigkeit (v) eines Rotors von einem Motor zu detektieren und die Rotationsgeschwindigkeit (v) ausgibt;
einen Positionsdetektor (13), der derart konfiguriert ist, um die Rotationsposition (p) des Rotors festzustellen;
einer Positionsschleife, welche einen Positionsabweichungs-Berechnungsabschnitt (SB1) und eine Positionscontroller (15) aufweist, wobei der Positionsabweichungs-Berechnungsabschnitt (SB1) derart konfiguriert ist, um eine Positionsabweichung (d1) zwischen einer Position, die durch einen Positionsbefehl (pc) bestimmt ist, zur Kennzeichnung einer Position, bei der der Rotor in einer Umdrehung davon gestoppt wird, und der Rotationsposition (p) zu berechnen,
und der Positionscontroller (15) derart konfiguriert ist, um die Positionsabweichung (d1) dazu einzugeben und einen Positionsschleifen-Geschwindigkeitsbefehl (vc) auszugeben;
einem Geschwindigkeitsbefehl-Auswahlabschnitt (SW2), der derart konfiguriert ist, um eine Ausgabe eines Rotationsgeschwindigkeitsbefehls (rsc) von einem übergeordneten Controller, eines Orientierungsgeschwindigkeitsbefehls (oc), der eine Orientierungsgeschwindigkeit kennzeichnet, und des Positionsschleifen-Geschwindigkeitsbefehls (vc) zu wählen;
einem Geschwindigkeitsabweichungs-Berechnungsabschnitt (SB2), der derart konfiguriert ist, um eine Geschwindigkeitsabweichung (d2) zwischen der Rotationsgeschwindigkeit (v) und der befohlenen Geschwindigkeit zu berechnen, welche durch den Geschwindigkeitsbefehl bestimmt ist, der durch den Geschwindigkeitsbefehl-Auswahlabschnitt (SW2) ausgewählt ist;
einem Geschwindigkeits-Controller (14), der derart konfiguriert ist, um dazu eine Ausgabe von dem Geschwindigkeitsabweichungs-Berechnungsabschnitt (SB2) einzugeben und einen Drehmomentbefehl (tc) auszugeben;
einen Drehmoment-Controller (16), der derart konfiguriert ist, um den Drehmomentbefehl (tc) als eine Eingabe zu erhalten und einen Strombefehl (ic) auszugeben;
einem Steuerabschnitt (17), der derart zur Durchführung der Steuerung konfiguriert ist, um den Geschwindigkeitsbefehl-Auswahlabschnitt (SW2) zu veranlassen, den Rotationsgeschwindigkeitsbefehl (rsc) während der stabilen Zustandskontrolle auszuwählen;

so, um den Geschwindigkeitsbefehl-Auswahlabschnitt (SW2) zu veranlassen, den Orientierungsgeschwindigkeits-Befehl (oc) auszuwählen, wenn der Motor gestoppt ist, um einen Drehmoment-Befehl (tc) an den Drehmoment-Controller (16) zu geben, um die Orientierungssteuerung für die Geschwindigkeit des Motors derart durchzuführen, dass die Rotationsgeschwindigkeit (v) des Rotors mit der Orientierungsgeschwindigkeit übereinstimmt, wobei der Drehmoment-Befehl (tc) durch Eingabe einer Abweichung zwischen dem Orientierungsgeschwindigkeits-Befehl (oc) und der Rotationsgeschwindigkeit (v) an den Geschwindigkeitscontroller (14) erhalten wird; und
so, dass der Geschwindigkeitsbefehl-Auswahlabschnitt (SW2) veranlasst wird, einen Positionsschleifen-Geschwindigkeitsbefehl (vc) auszuwählen, nachdem die Rotationsgeschwindigkeit (v) des Rotors mit der Orientierungsgeschwindigkeit übereinstimmt;
**gekennzeichnet durch**
einen automatischen Tuning-Abschnitt (18), der derart konfiguriert ist, um die Beschleunigung des Rotors zu berechnen und einen Verstärkungsgrad (C) des Positions-Controllers (15) zu bestimmen, der auf einem Maximalwert eines absoluten Wertes der Beschleunigung vor der Orientierungssteuerung basiert.

**8.** Motor-Steuerungssystem nach Anspruch 7, wobei:

der Geschwindigkeits-Detektor (12) derart konfiguriert ist, um es zu ermöglichen, eine quadrierte Geschwindigkeit ($v^2$), welche dem Quadrat der Rotationsgeschwindigkeit (v) entspricht, auszugeben; und
wobei das Motor-Steuerungssystem weiterhin aufweist:

einen Ausgabe-Auswahlabschnitt (SW1), der derart konfiguriert ist, um die Rotationsgeschwindigkeit (v) als eine Ausgabe des Geschwindigkeitsdetektors (12) während der stabilen Zustandskontrolle und wenn der Motor gestoppt ist, auszuwählen, und die Geschwindigkeit im Quadrat ($v^2$) als eine Ausgabe des Geschwindigkeitsdetektors (12) auszuwählen, nachdem die Rotationsgeschwindigkeit (v) des Rotors mit der Orientierungsgeschwindigkeit übereinstimmt; und
einen Additions-Abschnitt (AD), der derart konfiguriert ist, um einen Drehmoment-Additionsbefehl (ac) zu dem Drehmomentbefehl (tc) zu addieren, und einen addierten Drehmomentbefehl (atc) auszugeben, wobei:

der Geschwindigkeitsabweichungs-Berechnungsabschnitt (SB2) des Weiteren so konfiguriert ist, eine Geschwindigkeitsabweichung (d2) zwischen der quadrierten Geschwindigkeit ($v^2$) und dem Geschwindigkeitsbefehl, der durch einen Geschwindigkeitsbefehl, welcher durch den Geschwindigkeitsbefehl-Auswahlabschnitt (SW2) ausgewählt ist, zu berechnen, und die berechnete Geschwindigkeitsabweichung (d2) ausgibt, wenn der Ausgabe-Auswahlabschnitt (SW1) die quadrierte Geschwindigkeit ($v^2$) auswählt; und
der Drehmoment-Controller (16) dazu den addierten Drehmomentbefehl (atc) eingibt und den Strombefehl (ic) ausgibt.

**9.** Motor-Steuerungssystem nach Anspruch 8, wobei
unter der Annahme, dass der Verstärkungsgrad C ist, der automatische Tuning-Abschnitt (18) den Verstärkungsgrad C basierend auf der Formel: $C = 2 \times ACCP \times G_0$, berechnet,
worin ACCP ein Maximalwert eines Absolutwertes der Beschleunigung ist, und $G_0$ eine Konstante ist, die zur Steuerungsstabilisierung verwendet ist.

**10.** Motor-Steuerungssystem nach Anspruch 9, wobei
der automatische Tuning-Abschnitt (18) aufweist:

einen Tiefpass-Filter (20), um Störungen von einem Beschleunigungssignal, welches die Beschleunigung repräsentiert, zu entfernen;
einen Absolutwert-Berechnungsabschnitt (21), der derart konfiguriert ist, um den Absolutwert des Beschleunigungssignals, dessen Störung durch den Tiefpass-Filter (20), entfernt ist, zu generieren;
einen Maximalwert-Berechnungsabschnitt (22), der derart konfiguriert ist, um den Maximalwert ACCP des Absolutwertes der Beschleunigung zu berechnen; und
einen Verstärkungs-Berechnungsabschnitt (23) für die Positionssteuerung, der so konfiguriert ist, um den Verstärkungsgrad, welcher auf dem Maximalwert basiert, zu berechnen.

**11.** Motor-Steuerungssystem nach Anspruch 10, wobei,
wenn der Motor die Beschleunigung startet, der Verstärkungs-Berechnungsabschnitt (23) für die Positionssteuerung fortlaufend den Verstärkungsgrad C gemäß der oben angeführten Formel berechnet, einen Anfangswert C1 als Verstärkungsgrad C in dem Positionscontroller (15) setzt, und dann, wenn der Maximalwert-Berechnungsabschnitt (22) den Maximalwert berechnet, den Verstärkungsgrad C, der dem Maximalwert des Verstärkungsgrades (C) des Positionscontrollers (15) entspricht, setzt, und den Wert des Verstärkungsgrades (C) des Positionscontrollers (15) auf den Anfangswert C1 nach Beendigung der Orientierungssteuerung, zurücksetzt.

**12.** Motor-Steuerungssystem nach Anspruch 8, wobei der Kontrollabschnitt (17) die Eingabe an den Drehmoment-Controller (16) so regelt, dass eine gleitende Modus-Steuerung durchgeführt ist, die die Position und Geschwindigkeit des Rotors entsprechend einer gleitenden Kurve steuert, welche unter Verwendung physikalischer Parameter, die für die Orientierungs-Steuerung verwendet sind, definiert, um den Rotor in einer Zielposition zu stoppen.

## Revendications

**1.** Procédé destiné à commander un moteur en utilisant un détecteur de vitesse (12), un détecteur de position (13), un contrôleur de position (15), un contrôleur de vitesse (14), un contrôleur de couple (16) et une partie de commande (17), le procédé comprenant les étapes de ;
détection, en utilisant le détecteur de vitesse (12), d'une vitesse rotationnelle (v) d'un rotor d'un moteur et sortie de la vitesse rotationnelle (v) ;
détection, en utilisant le détecteur de position (13), de la position rotationnelle (p) du rotor ;
sortie, en utilisant le contrôleur de position (15), d'une commande de vitesse de boucle de position (vc) ; dans lequel le contrôleur de position (15) reçoit en entrée une déviation positionnelle (d1) entre la position rotationnelle (p) et une position indiquée par une commande de position (pc) qui indique une position à laquelle le rotor doit être arrêté dans une rotation de celui-ci ;
sortie, en utilisant le contrôleur de vitesse (14), d'une commande de couple (tc) au contrôleur de couple (16), dans lequel le contrôleur de vitesse (14) reçoit en entrée une déviation de vitesse (d2) entre la vitesse rotationnelle (v) et une vitesse indiquée par l'une d'une commande de vitesse rotationnelle (rsc) délivrée en sortie par un contrôleur supérieur, d'une commande de vitesse d'orientation (oc) qui indique une vitesse d'orientation, et de la commande de vitesse de boucle de position (vc) ;
sortie, en utilisant le contrôleur de couple (16), d'une commande de courant (ic) ; et
commande d'un moteur, en utilisant la partie de commande (17), de telle sorte que la commande de vitesse rotationnelle (rsc) soit choisie au cours d'un réglage à l'état stationnaire ; lorsque le moteur est arrêté, la commande de vitesse d'orientation (oc) est choisie de façon à fournir une commande de couple (tc) au contrôleur de couple (16) de manière à exécuter une commande d'orientation à la vitesse du rotor de telle sorte que la vitesse rotationnelle (v) du rotor coïncide avec la vitesse d'orientation, la commande de couple (tc) étant obtenue en entrant une déviation entre la commande de vitesse d'orientation (oc) et la vitesse rotationnelle (v) au contrôleur de vitesse (14) ; et la commande de vitesse de boucle de position (vc) est choisie une fois que la vitesse rotationnelle (v) du rotor a coïncidé avec la vitesse d'orientation, **caractérisé en ce que** :

le procédé utilise en outre une partie de réglage automatique (18) et comprend les étapes de : calcul, en utilisant la partie de réglage automatique (18), d'une accélération du rotor, et la détermination d'un gain (C) du contrôleur de position (15) sur la base d'une valeur maximum d'une valeur absolue de l'accélération avant la commande d'orientation.

**2.** Procédé destiné à commander un moteur selon la revendication 1, comprenant en outre les étapes de :

l'exécution d'une commande d'orientation de la vitesse rotationnelle (v) du rotor de telle sorte que la vitesse rotationnelle (v) du rotor coïncide avec une vitesse d'orientation lorsque la commande de vitesse d'orientation (oc) est entrée, en calculant une déviation entre la vitesse d'orientation indiquée par la commande de vitesse d'orientation (oc) et la vitesse du rotor ; l'entrée de la déviation dans le contrôleur de vitesse (14) pour obtenir une commande de couple (tc) ; et l'entrée de la commande de couple (tc) dans le contrôleur de couple (16) ; et l'entrée d'une commande de couple (tc) dans le contrôleur de couple (16), une fois que la vitesse rotationnelle (v) du rotor a coïncidé avec la vitesse d'orientation, la commande de couple (tc) étant obtenue en calculant une déviation positionnelle (d1) entre la position du rotor et une position indiquée par la commande de position (pc) qui indique une position à laquelle le rotor doit être arrêté dans une rotation de celui-ci ; l'entrée de la déviation positionnelle (d1) dans le contrôleur de position (15) pour obtenir une commande de vitesse de boucle de position (vc) ; l'élévation au carré de la vitesse rotationnelle (v) et le codage du résultat de l'élévation au carré pour obtenir une vitesse élevée au carré ($v^2$) ; le calcul d'une déviation entre la commande de vitesse de boucle de position (vc) et la vitesse élevée au carré ($v^2$) ; et l'entrée de la déviation dans le contrôleur de vitesse (14) pour obtenir la commande de couple (tc).

**3.** Procédé destiné à commander un moteur selon la revendication 2, dans lequel :

en supposant que le gain est désigné par C, le gain C est calculé sur la base de l'expression : C = 2 x ACCP x $G_0$; dans laquelle ACCP est une valeur maximum d'une valeur absolue de l'accélération, et $G_0$ est une constante utilisée pour une stabilisation de commande.

**4.** Procédé destiné à commander un moteur selon la revendication 3, dans lequel :

un signal d'accélération qui représente l'accélération, passe à travers un filtre passe-bas (20) pour éliminer le bruit, une valeur absolue de l'accélération est générée à partir du signal d'accélération duquel le bruit a été éliminé, et la valeur maximum ACCP est calculée à partir de la valeur absolue de l'accélération.

**5.** Procédé destiné à commander un moteur selon la revendication 4, dans lequel :

une valeur initiale C1 est fixée pour le gain C dans le contrôleur de position (15) ;
le gain C continue à être calculé sur la base de l'expression lorsque le moteur commence à accélérer et accélère ;
le gain C qui correspond à la valeur maximum de la valeur absolue de l'accélération, est fixé en tant que le gain (C) du contrôleur de position (15) ; et
la valeur du gain (C) du contrôleur de position (15) est fixée de nouveau à la valeur initiale C1 à la fin de la commande d'orientation.

**6.** Procédé destiné à commander un moteur selon la revendication 2, comprenant en outre l'étape d'exécution d'une commande de mode de glissement en ajustant l'entrée au contrôleur de couple (16), la commande de mode de glissement commandant la position et la vitesse du rotor selon une courbe de glissement définie en utilisant des paramètres physiques utilisés pour la commande d'orientation de façon à arrêter le rotor à une position cible.

**7.** Système de commande de moteur comprenant :

un détecteur de vitesse (12) configuré pour détecter la vitesse rotationnelle (v) d'un rotor d'un moteur et la sortie de la vitesse rotationnelle (v) ;
un détecteur de position (13) configuré pour détecter la position rotationnelle (p) du rotor ;
une boucle de position qui comprend une partie de calcul de déviation de position (SB 1) et un contrôleur de position (15), la partie de calcul de déviation de position (SB1) étant configurée pour calculer une déviation positionnelle (d1) entre une position indiquée par une commande de position (pc) qui indique une position à laquelle le rotor doit être arrêté dans une rotation de celui-ci et la position rotationnelle (p), le contrôleur de position (15) étant configuré pour recevoir la déviation positionnelle (d1) et pour délivrer en sortie une commande de vitesse de boucle de position (vc) ;
une partie de choix de commande de vitesse (SW2) configurée pour choisir l'une d'une commande de vitesse rotationnelle (rsc) délivrée en sortie par un contrôleur supérieur, une commande de vitesse d'orientation (oc) qui indique une vitesse d'orientation et la commande de vitesse de boucle de position (vc) ;
une partie de calcul de déviation de vitesse (SB2), configurée pour calculer une déviation de vitesse (d2) entre la vitesse rotationnelle (v) et la vitesse commandée indiquée par la commande de vitesse choisie par la partie de choix de commande de vitesse (SW2) ;
un contrôleur de vitesse (14), configuré pour faire entrer dans celui-ci une sortie en provenance de la partie calcul de déviation de vitesse (SB2) et pour délivrer en sortie une commande de couple (tc) ;
un contrôleur de couple (16), configuré pour recevoir la commande de couple (tc) en entrée et pour délivrer en sortie une commande de courant (ic) ;
une partie de commande (17), configurée pour exécuter une commande de telle sorte que la partie de choix de commande de vitesse (SW2) choisisse la commande de vitesse rotationnelle (rsc) au cours du réglage à l'état stationnaire ; de telle sorte que la partie de choix de commande de vitesse (SW2) choisisse la commande de vitesse d'orientation (oc), lorsque le moteur est arrêté, de façon à fournir une commande de couple (tc) au contrôleur de couple (16) de manière à exécuter une commande d'orientation pour la vitesse du rotor de telle sorte que la vitesse rotationnelle (v) du rotor coïncide avec la vitesse d'orientation, la commande de couple (tc) étant obtenue en entrant une déviation entre la commande de vitesse d'orientation (oc) et la vitesse rotationnelle (v) dans le contrôleur de vitesse (14) ; et de telle sorte que la partie de choix de commande de vitesse (SW2) choisisse une commande de vitesse de boucle de position (vc) une fois que la vitesse rotationnelle (v) du rotor ait coïncidé avec la vitesse d'orientation ; et
**caractérisé en ce qu'**une partie de réglage automatique (18), configurée pour calculer l'accélération du rotor, et pour déterminer un gain (C) du contrôleur de position (15) sur la base d'une valeur maximum d'une valeur absolue de l'accélération avant la commande d'orientation.

**8.** Système de commande de moteur selon la revendication 7, dans lequel :

le détecteur de vitesse (12) est configuré pour pouvoir délivrer en sortie une vitesse élevée au carré ($v^2$) qui correspond au carré de la vitesse rotationnelle (v) ; et
le système de commande de moteur comprend en outre :

une partie de choix de sortie (SW1) configurée pour choisir la vitesse rotationnelle (v) en tant que sortie du détecteur de vitesse (12) au cours du réglage à l'état stationnaire et, lorsque le moteur est arrêté, pour choisir la vitesse élevée au carré ($v^2$) en tant que sortie du détecteur de vitesse (12) une fois que la vitesse rotationnelle (v) du rotor ait coïncidé avec la vitesse d'orientation ; et
une partie d'ajout (AD), configurée pour ajouter une commande d'ajout de couple (ac) à la commande de couple (tc) et pour délivrer en sortie une commande de couple ajoutée (atc), dans laquelle :

la partie de calcul de déviation de vitesse (SB2) est configurée en outre pour calculer une déviation de vitesse (d2) entre la vitesse élevée au carré ($v^2$) et la commande de vitesse indiquée par une commande de vitesse choisie par la partie de choix de commande de vitesse (SW2), et pour délivrer en sortie la déviation de vitesse calculé (d2) lorsque la partie de choix de sortie (SW1) choisit la vitesse élevée au carré ($v^2$) ; et
le contrôleur de couple (16) fait entrer dans celui-ci la commande de couple ajoutée (atc) et délivre en sortie la commande de courant (ic).

**9.** Système de commande de moteur selon la revendication 8, dans lequel, en supposant que le gain est désigné par C, la partie de réglage automatique (18) calcule le gain C sur la base de l'expression : $C = 2 \times ACCP \times G_0$; dans laquelle ACCP est une valeur maximum d'une valeur absolue de l'accélération et $G_0$ est une constante utilisée pour une stabilisation de commande.

**10.** Système de commande de moteur selon la revendication 9, dans lequel la partie de réglage automatique (18) comprend :

un filtre passe-bas (20) qui élimine le bruit d'un signal d'accélération qui représente l'accélération ;
une partie de calcul de valeur absolue (21), configurée pour générer la valeur absolue du signal d'accélération dont le bruit a été éliminé par le filtre passe-bas (20) ;
une partie de calcul de valeur maximum (22), configurée pour calculer la valeur maximum ACCP de la valeur absolue de l'accélération ; et
une partie de calcul de gain de commande de position (23), configurée pour calculer le gain sur la base de la valeur maximum.

**11.** Système de commande de moteur selon la revendication 10, dans lequel :

lorsque le moteur commence à accélérer, la partie de calcul de gain de commande de position (23) continue à calculer le gain C selon l'expression ci-dessus, fixe une valeur initiale C1 en tant que gain C dans le contrôleur de position (15), fixe ensuite, lorsque la partie calcul de valeur maximum (22) calcule la valeur maximum, le gain C qui correspond à la valeur maximum en tant que gain (C) du contrôleur de position (15), et fixe de nouveau la valeur du gain (C) du contrôleur de position (15) à la valeur initiale C1 à la fin de la commande d'orientation.

**12.** Système de commande de moteur selon la revendication 8, dans lequel :

la partie de commande (17) ajuste l'entrée dans le contrôleur de couple (16) de façon à exécuter une commande de mode de glissement qui commande la position et la vitesse du rotor selon une courbe de glissement définie en utilisant des paramètres physiques utilisés pour la commande d'orientation de façon à arrêter le rotor à une position cible.

Fig. 1

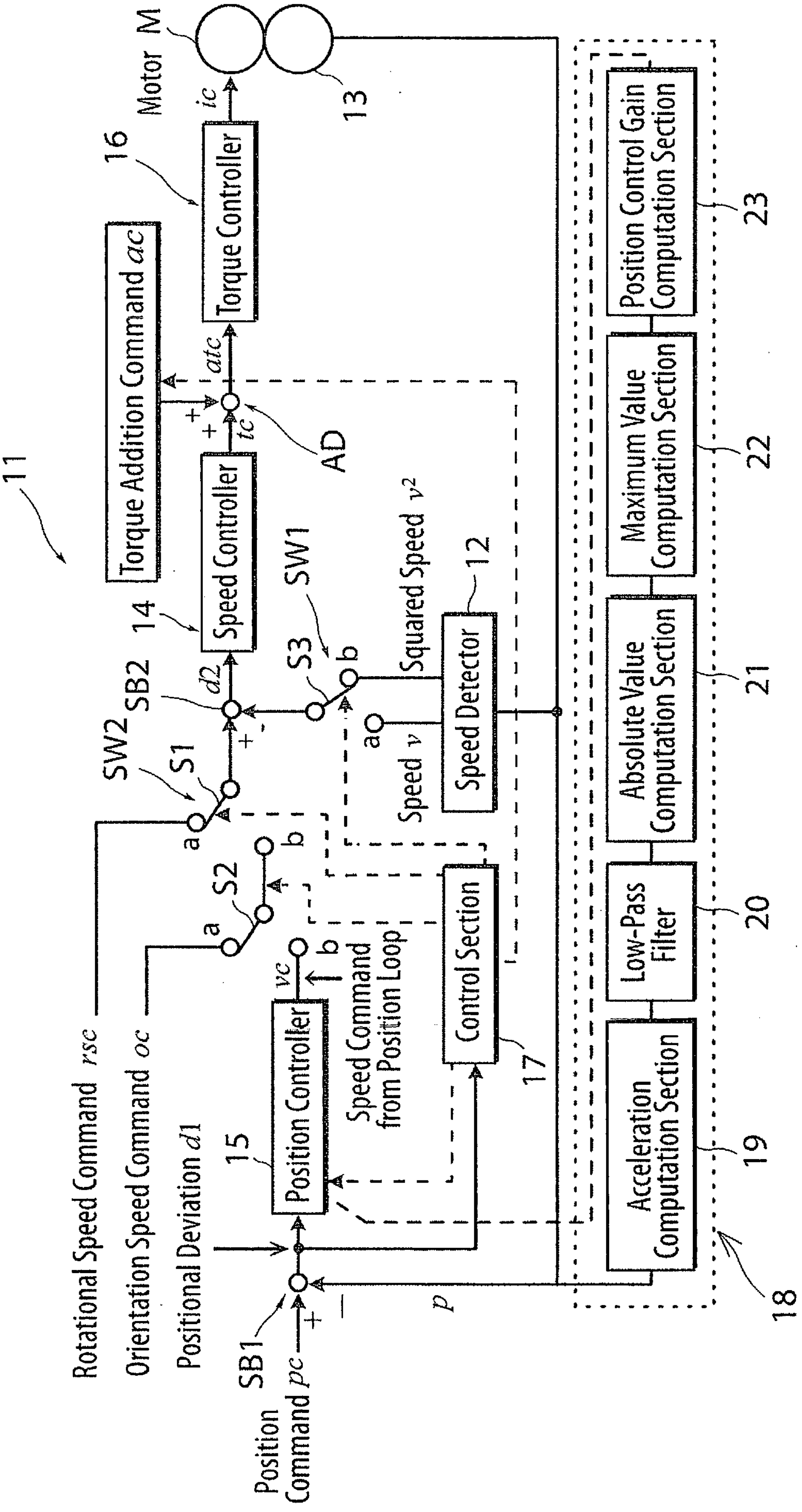

11
Motor M
13
ic
16
Torque Controller
Torque Addition Command ac
atc
AD
tc
14
Speed Controller
SB2
d2
SW1
S3
Squared Speed v²
12
Speed Detector
Speed v
SW2
S1
S2
Control Section
17
Position Controller
15
vc
Speed Command from Position Loop
Rotational Speed Command rsc
Orientation Speed Command oc
Positional Deviation d1
Position Command pc
SB1
p
Acceleration Computation Section
19
Low-Pass Filter
20
Absolute Value Computation Section
21
Maximum Value Computation Section
22
Position Control Gain Computation Section
23
18

Fig.2

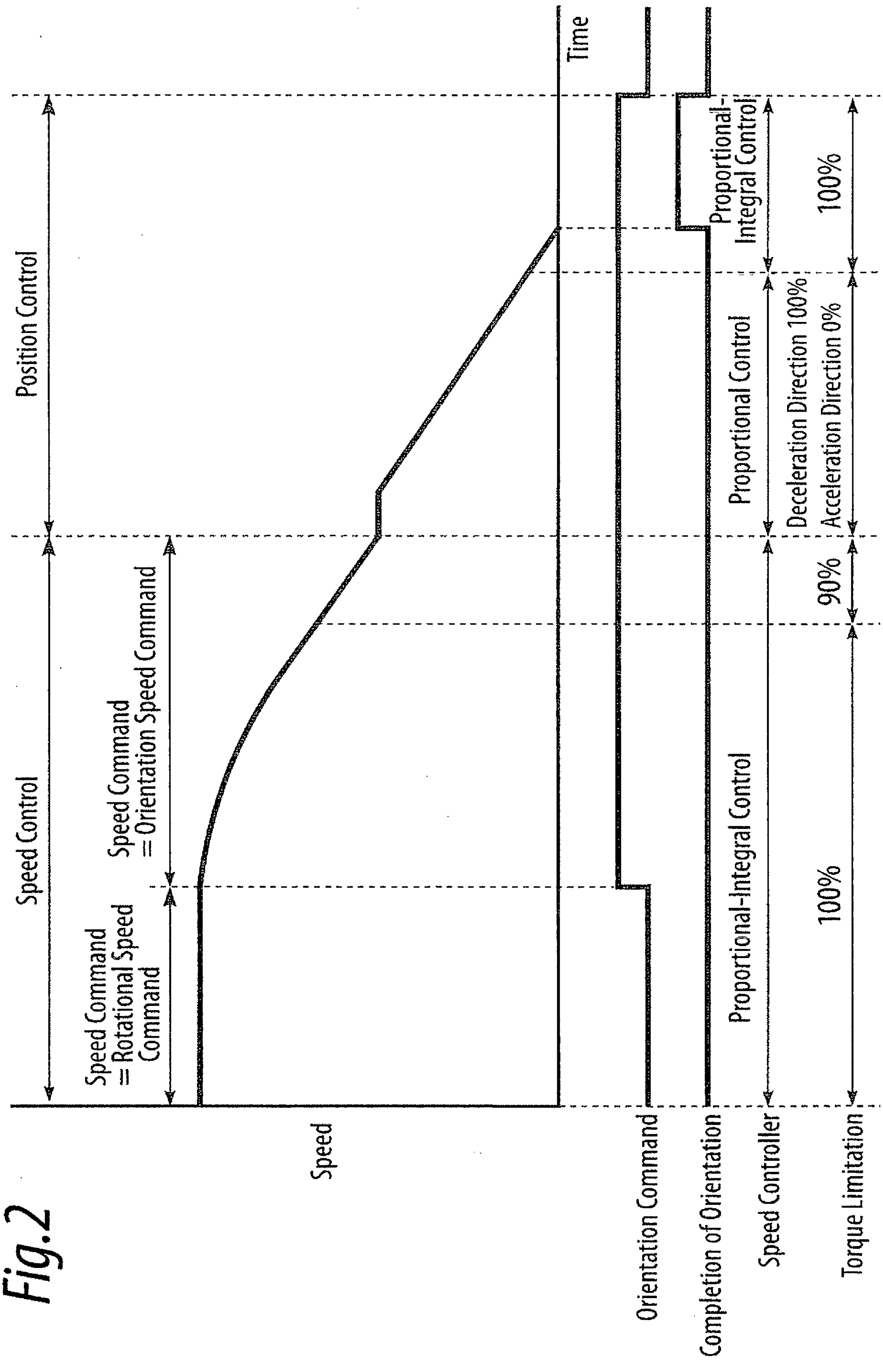
Speed Control
Position Control
Speed Command = Rotational Speed Command
Speed Command = Orientation Speed Command
Speed
Time
Orientation Command
Completion of Orientation
Speed Controller
Torque Limitation
Proportional-Integral Control
Proportional Control
Proportional-Integral Control
100%
90%
Deceleration Direction 100%
Acceleration Direction 0%
100%

Fig.3

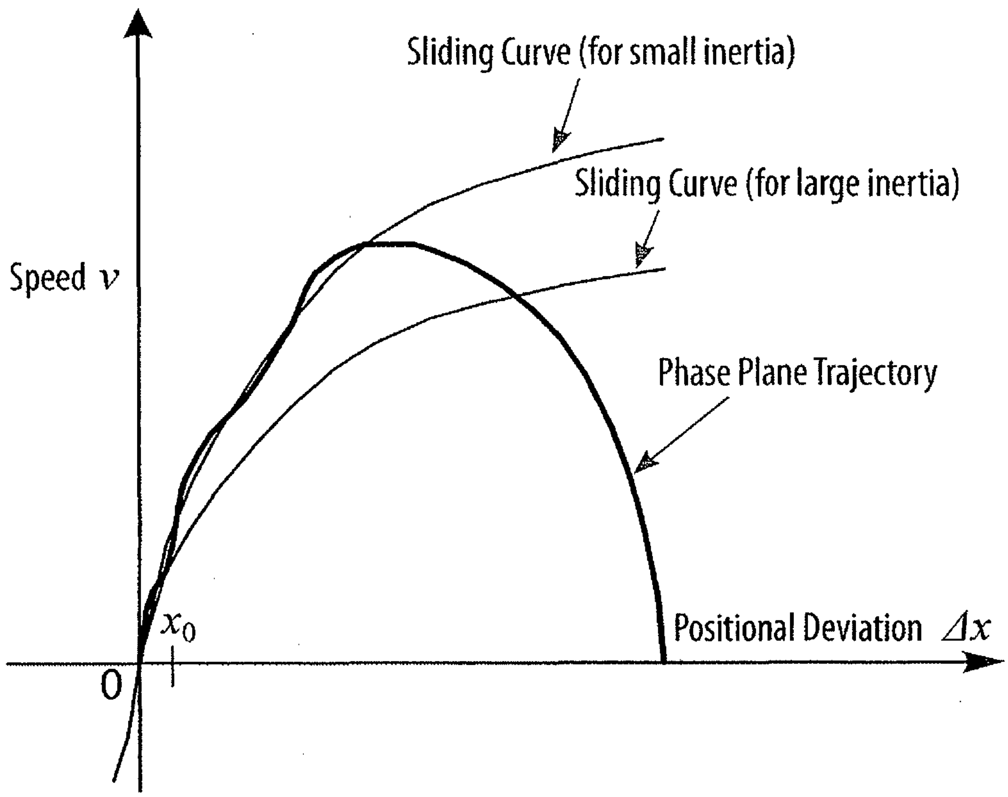
Sliding Curve (for small inertia)
Sliding Curve (for large inertia)
Speed $v$
Phase Plane Trajectory
$x_0$
Positional Deviation $\Delta x$
0

Fig.4A

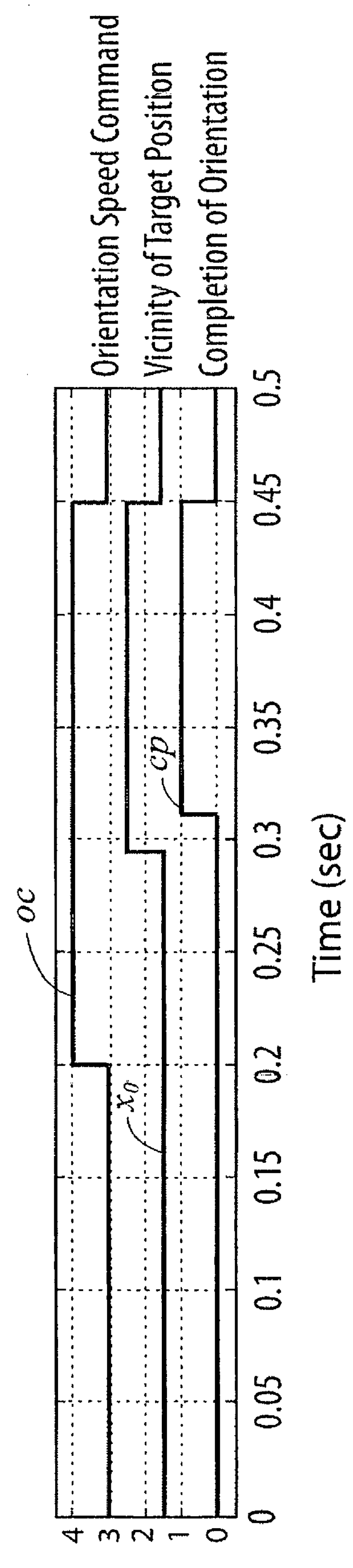
Orientation Speed Command
Vicinity of Target Position
Completion of Orientation
oc
$x_0$
cp
4
3
2
1
0
0
0.05
0.1
0.15
0.2
0.25
0.3
0.35
0.4
0.45
0.5
Time (sec)

Fig.4B

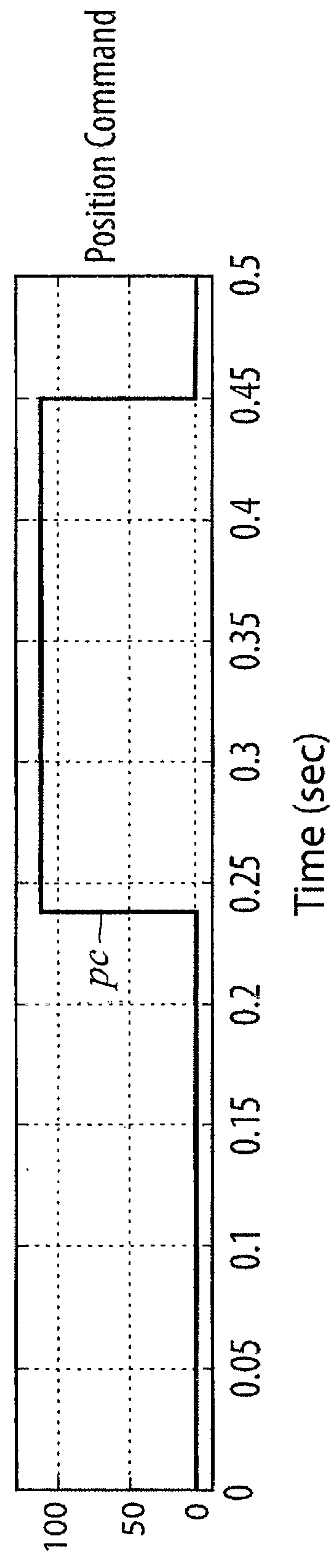
Position Command
pc
100
50
0
0
0.05
0.1
0.15
0.2
0.25
0.3
0.35
0.4
0.45
0.5
Time (sec)

Fig.4C

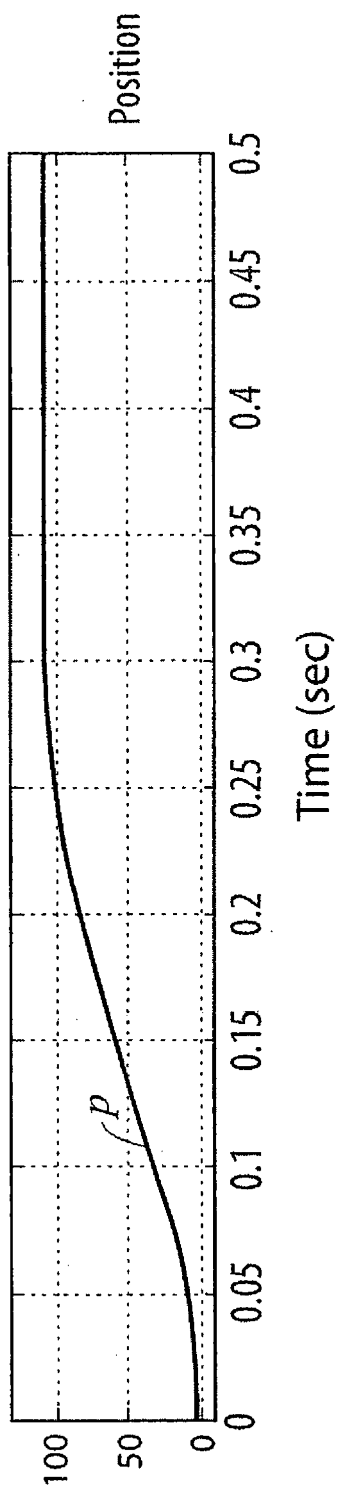
Position
100
50
0
0
0.05
0.1
0.15
0.2
0.25
0.3
0.35
0.4
0.45
0.5
Time (sec)
P

Fig.4D

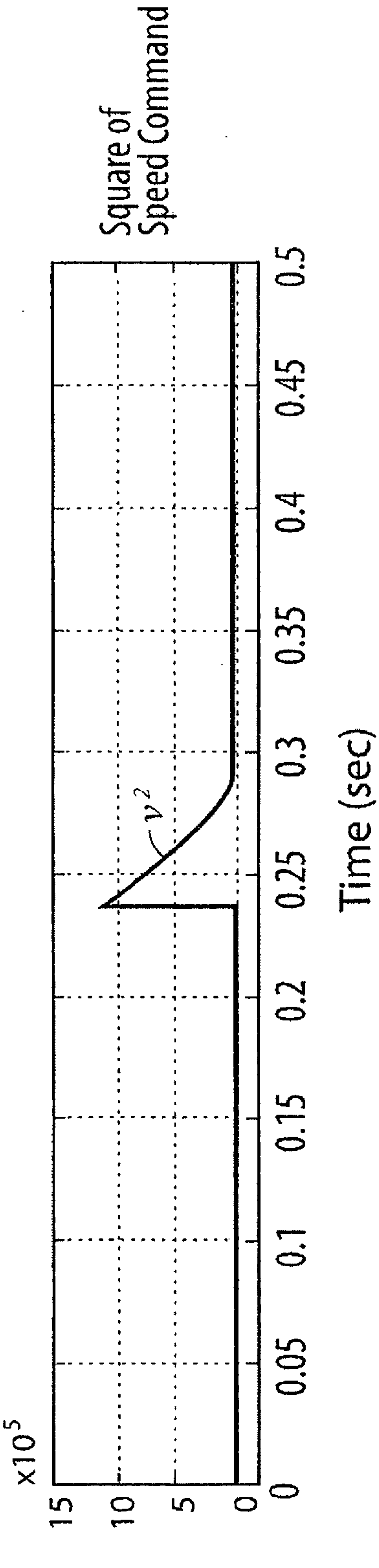
Square of
Speed Command
x10^5
15
10
5
0
0
0.05
0.1
0.15
0.2
0.25
0.3
0.35
0.4
0.45
0.5
Time (sec)
v^2

Fig.4E

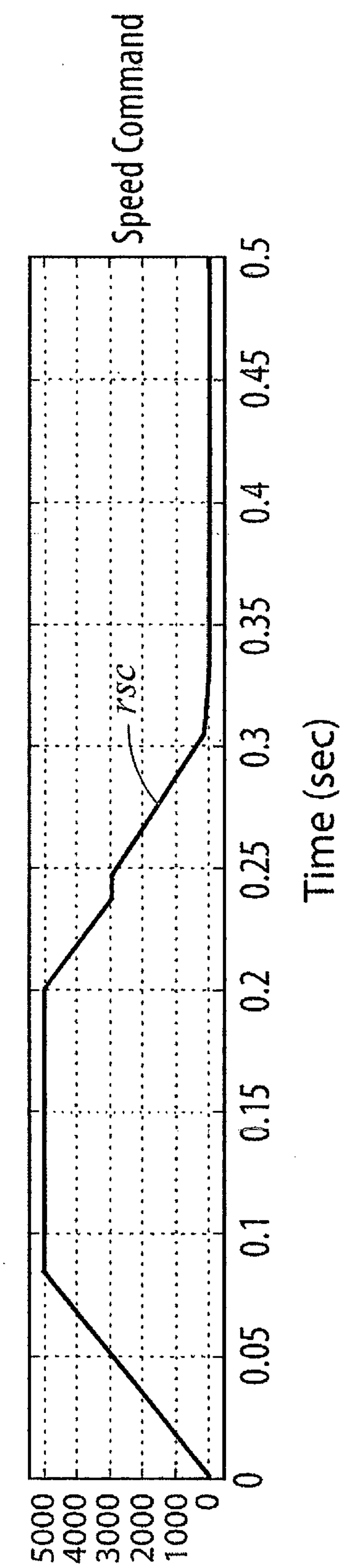
Speed Command
rsc
5000
4000
3000
2000
1000
0
0
0.05
0.1
0.15
0.2
0.25
0.3
0.35
0.4
0.45
0.5
Time (sec)

Fig.4F

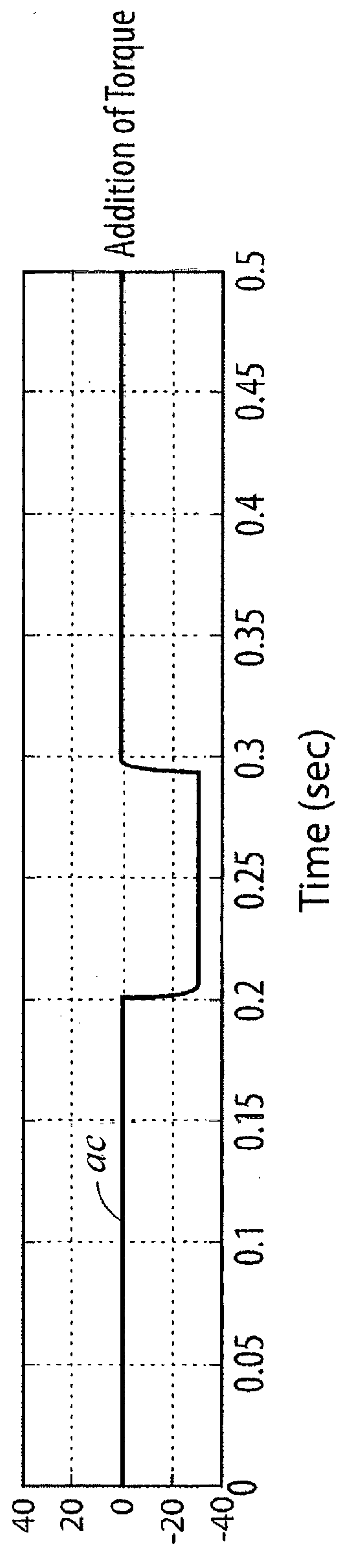
Addition of Torque
ac
40
20
0
-20
-40
0
0.05
0.1
0.15
0.2
0.25
0.3
0.35
0.4
0.45
0.5
Time (sec)

Fig.4G

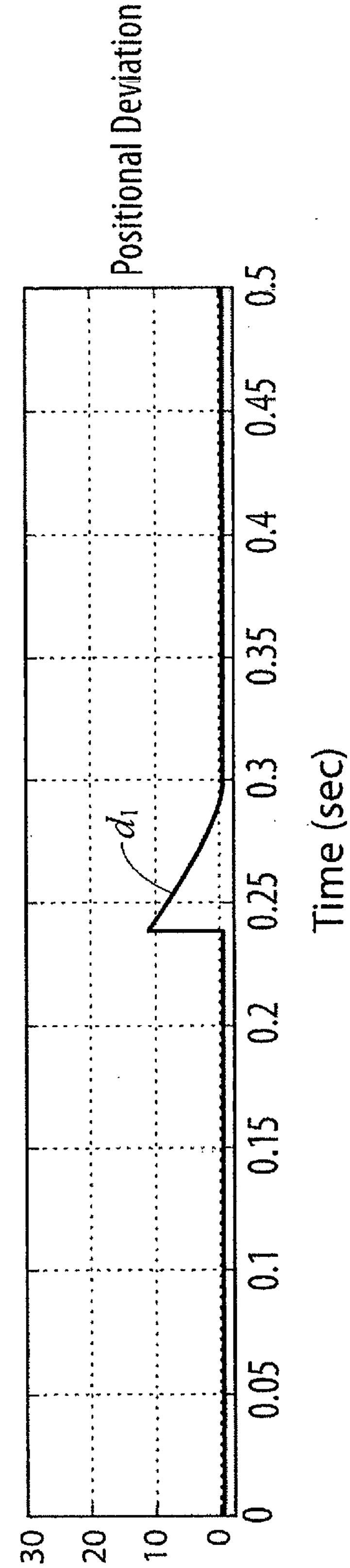
Positional Deviation
30
20
10
0
0
0.05
0.1
0.15
0.2
0.25
0.3
0.35
0.4
0.45
0.5
$d_1$
Time (sec)

Fig.5A

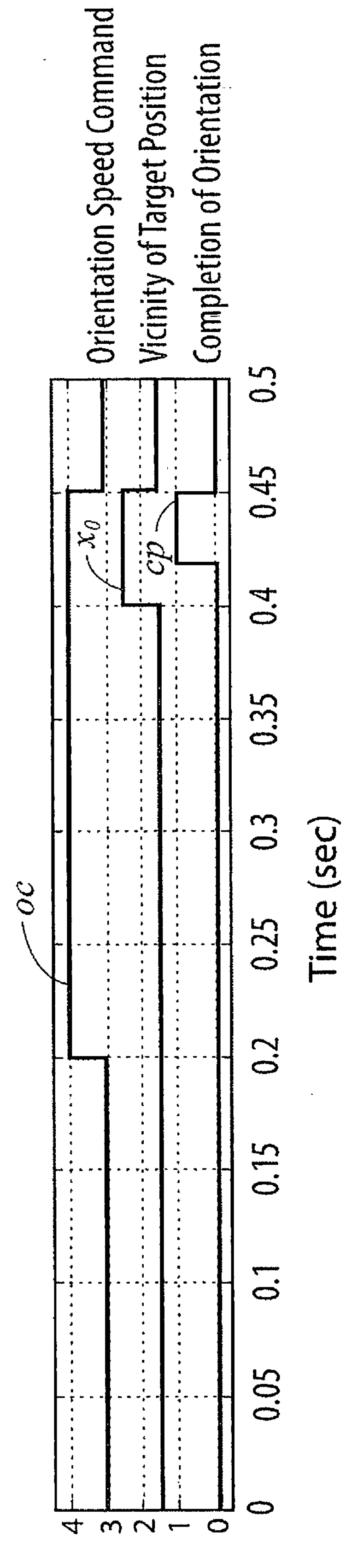
Orientation Speed Command
Vicinity of Target Position
Completion of Orientation
oc
$x_0$
cp
4
3
2
1
0
0
0.05
0.1
0.15
0.2
0.25
0.3
0.35
0.4
0.45
0.5
Time (sec)

Fig.5B

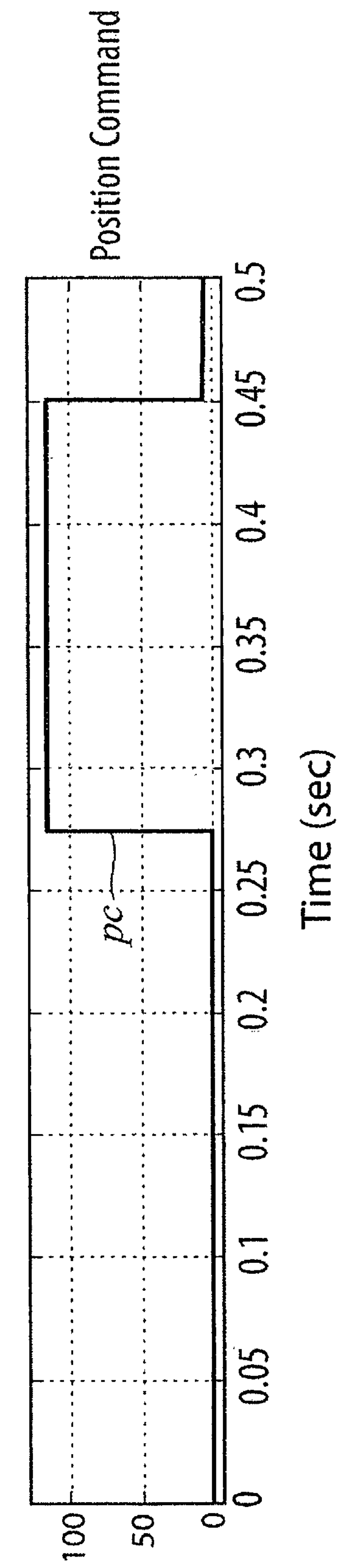
Position Command
pc
100
50
0
0
0.05
0.1
0.15
0.2
0.25
0.3
0.35
0.4
0.45
0.5
Time (sec)

Fig.5C

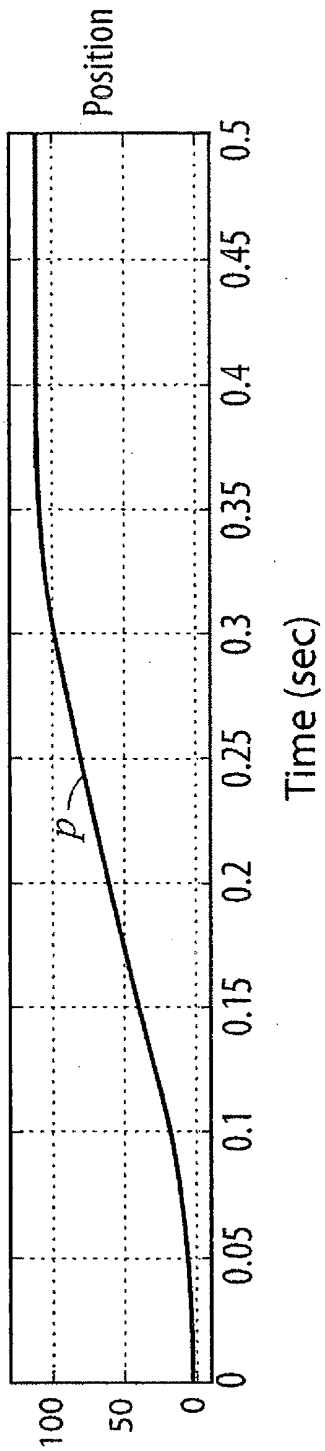
Position
p
100
50
0
0
0.05
0.1
0.15
0.2
0.25
0.3
0.35
0.4
0.45
0.5
Time (sec)

Fig.5D

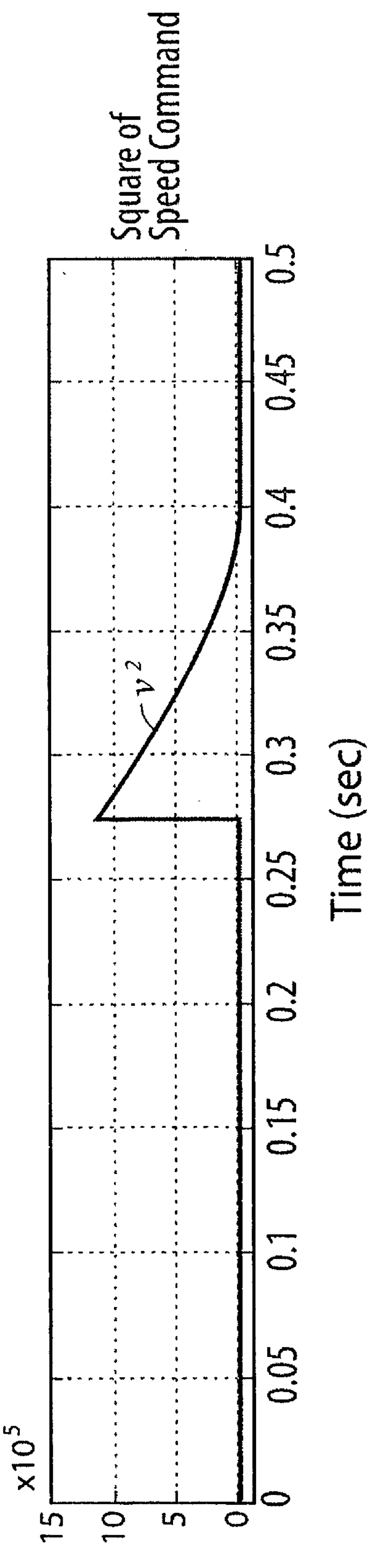
Square of
Speed Command
v 2
x10 5
15
10
5
0
0
0.05
0.1
0.15
0.2
0.25
0.3
0.35
0.4
0.45
0.5
Time (sec)

Fig.5E

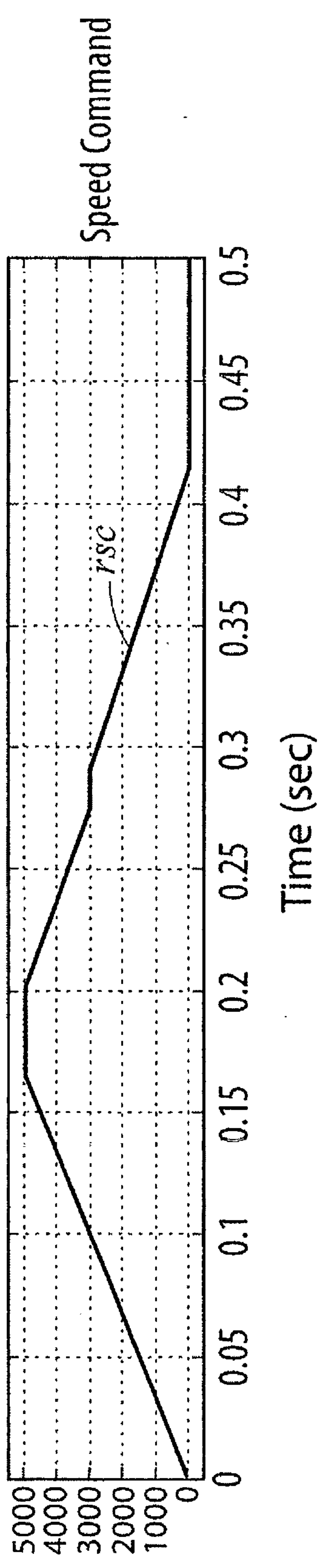
Speed Command
rsc
5000
4000
3000
2000
1000
0
0
0.05
0.1
0.15
0.2
0.25
0.3
0.35
0.4
0.45
0.5
Time (sec)

Fig.5F

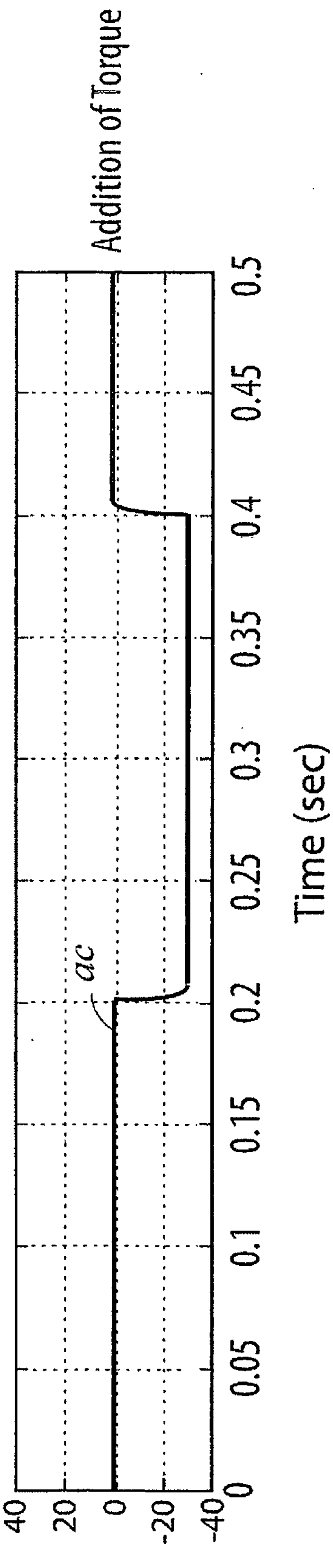
Addition of Torque
ac
40
20
0
-20
-40
0
0.05
0.1
0.15
0.2
0.25
0.3
0.35
0.4
0.45
0.5
Time (sec)

Fig.5G

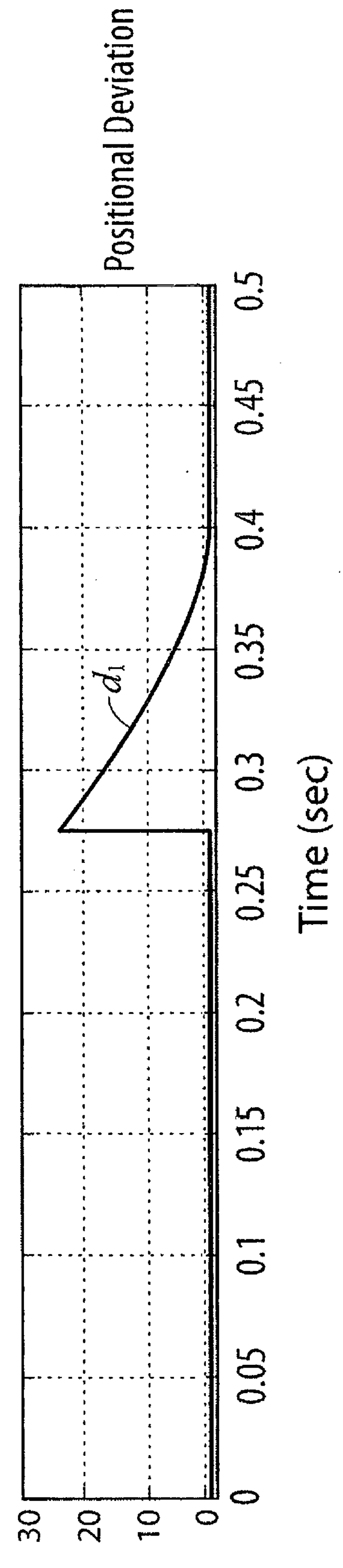
Positional Deviation
30
20
10
0
0
0.05
0.1
0.15
0.2
0.25
0.3
0.35
0.4
0.45
0.5
Time (sec)
$d_1$

Fig.6

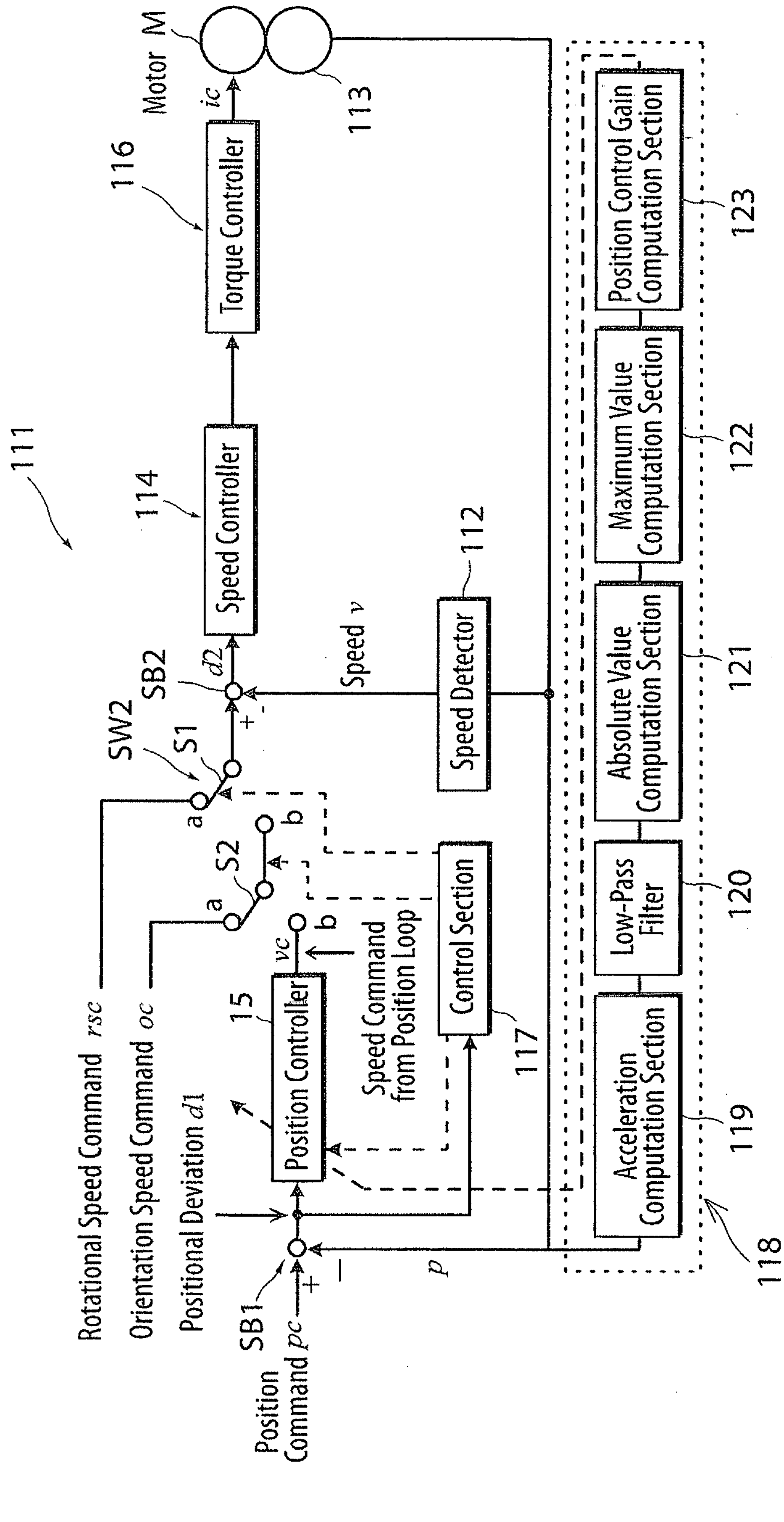
111
Motor M
ic
113
116
Torque Controller
114
Speed Controller
SB2
d2
SW2
S1
a
b
S2
a
b
Speed v
112
Speed Detector
Rotational Speed Command rsc
Orientation Speed Command oc
Positional Deviation d1
15
Position Controller
vc
Speed Command from Position Loop
Control Section
117
SB1
Position Command pc
+
−
p
118
Acceleration Computation Section
119
Low-Pass Filter
120
Absolute Value Computation Section
121
Maximum Value Computation Section
122
Position Control Gain Computation Section
123

Fig.7

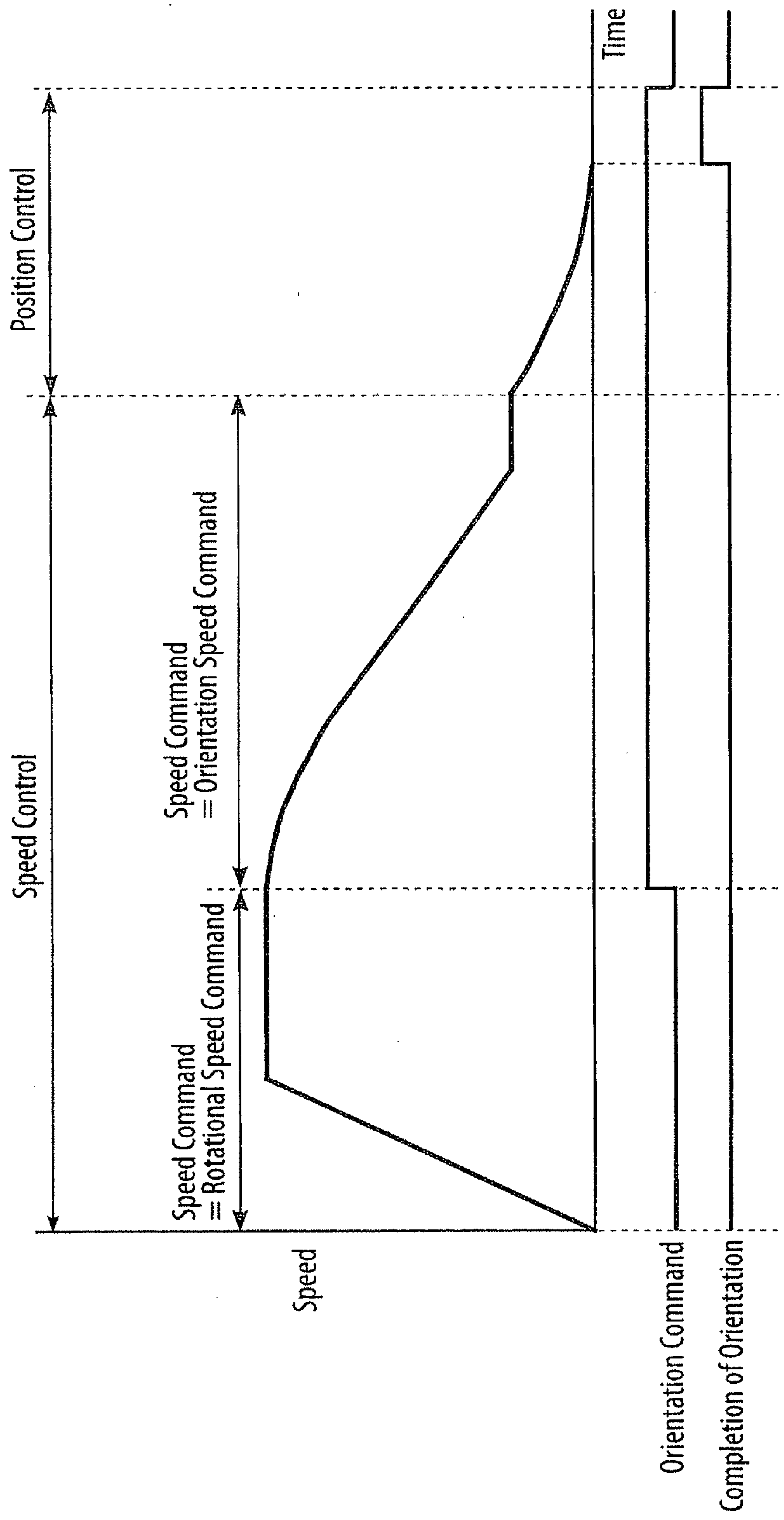
Speed Control
Position Control
Speed Command
= Rotational Speed Command
Speed Command
= Orientation Speed Command
Speed
Time
Orientation Command
Completion of Orientation

Fig.8

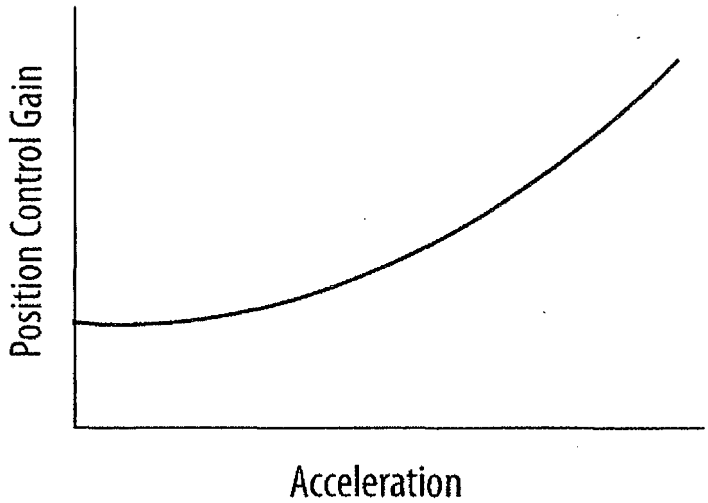

Fig.9A

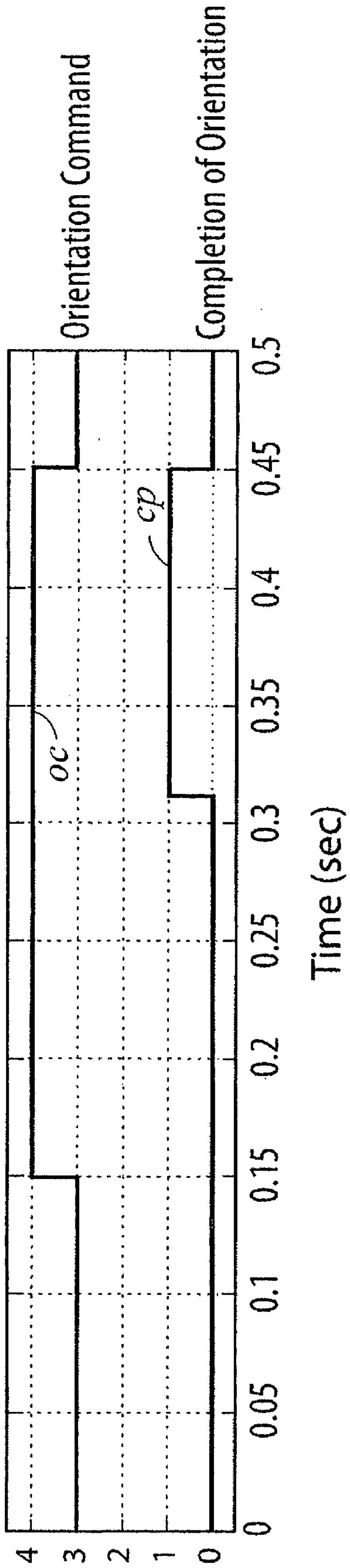
Orientation Command
Completion of Orientation
oc
cp
4
3
2
1
0
0
0.05
0.1
0.15
0.2
0.25
0.3
0.35
0.4
0.45
0.5
Time (sec)

Fig.9B

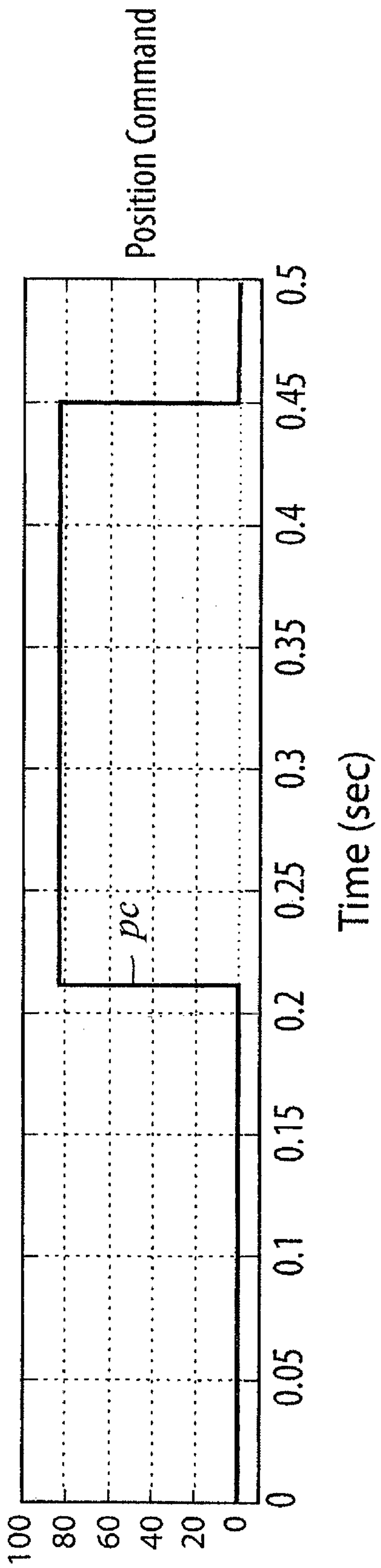
Position Command
pc
100
80
60
40
20
0
0
0.05
0.1
0.15
0.2
0.25
0.3
0.35
0.4
0.45
0.5
Time (sec)

Fig.9C

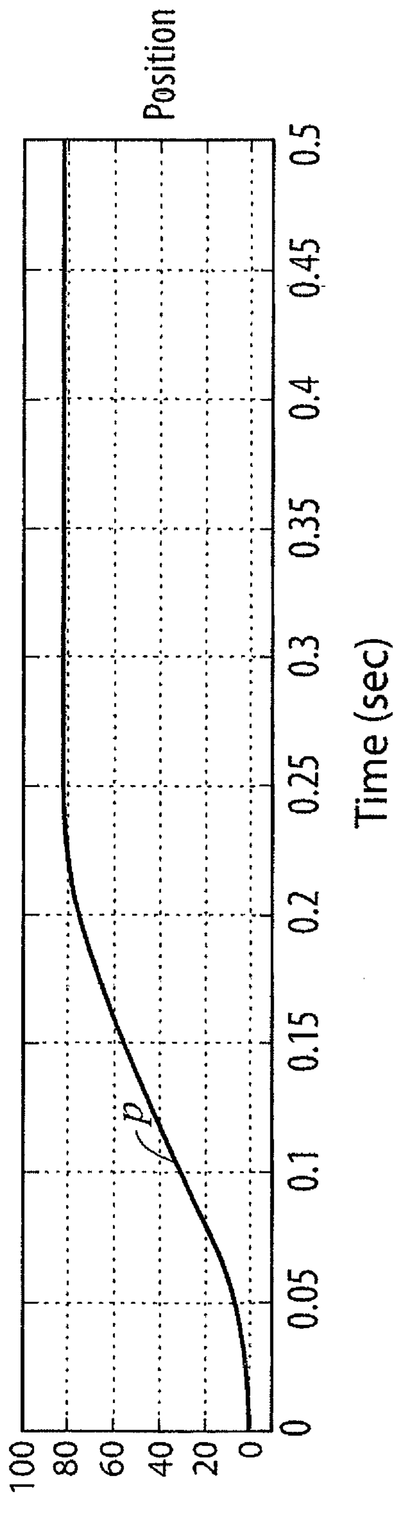
Position
100
80
60
40
20
0
0
0.05
0.1
0.15
0.2
0.25
0.3
0.35
0.4
0.45
0.5
Time (sec)
p

Fig.9D

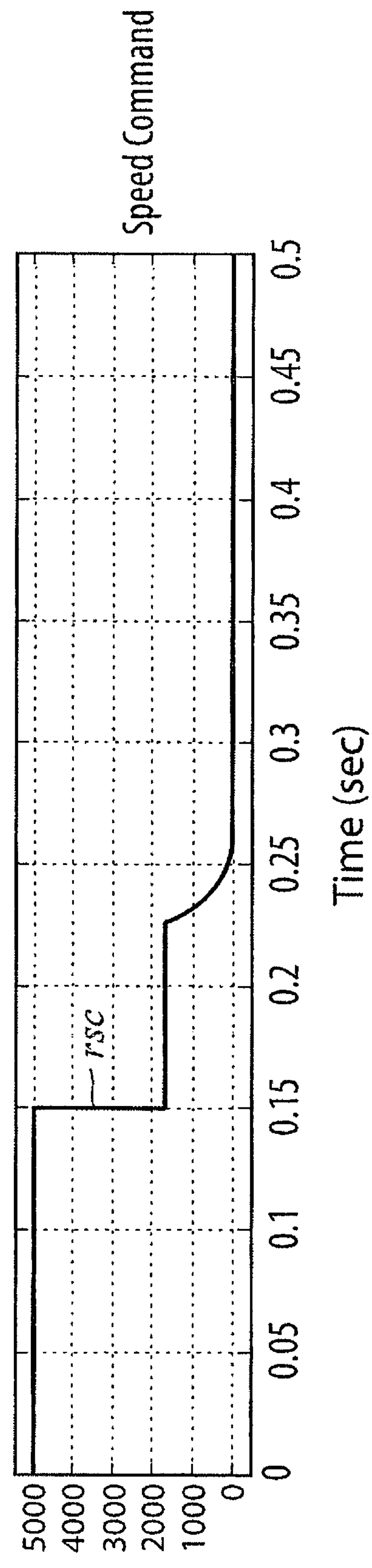
Speed Command
5000
4000
3000
2000
1000
0
0
0.05
0.1
0.15
0.2
0.25
0.3
0.35
0.4
0.45
0.5
Time (sec)
rsc

Fig.9E

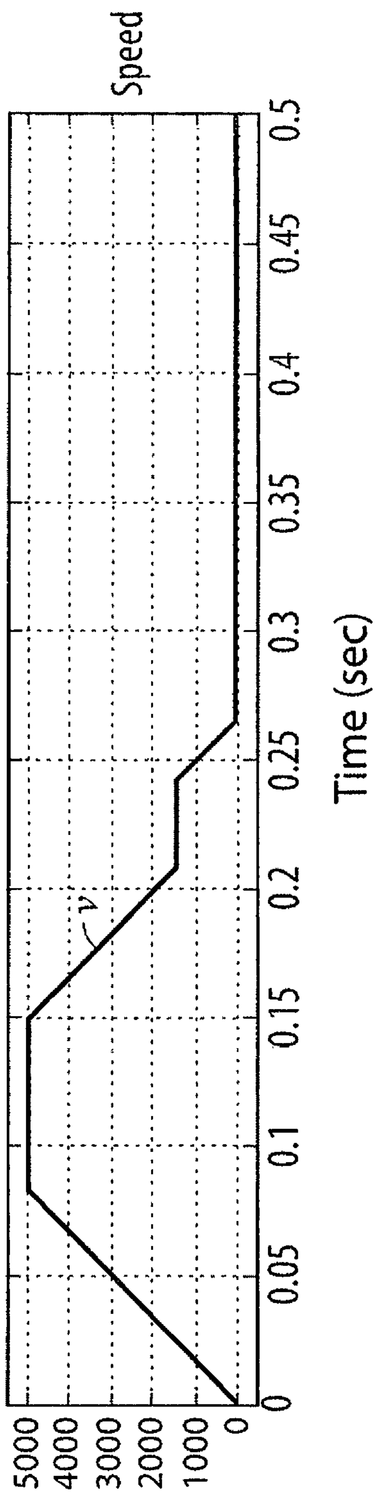
Speed
5000
4000
3000
2000
1000
0
v
0
0.05
0.1
0.15
0.2
0.25
0.3
0.35
0.4
0.45
0.5
Time (sec)

Fig.9F

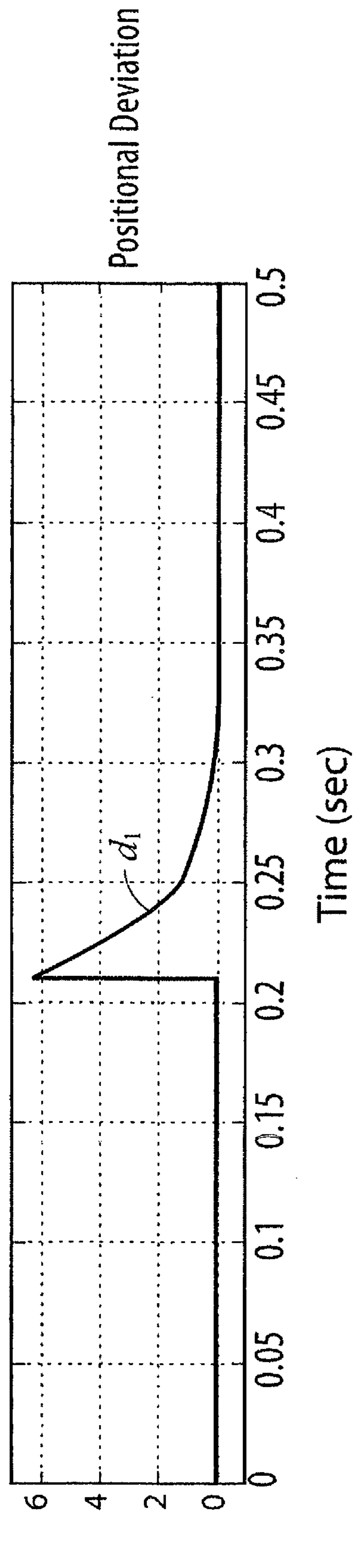
Positional Deviation
6
4
2
0
$d_1$
0
0.05
0.1
0.15
0.2
0.25
0.3
0.35
0.4
0.45
0.5
Time (sec)

Fig.10A

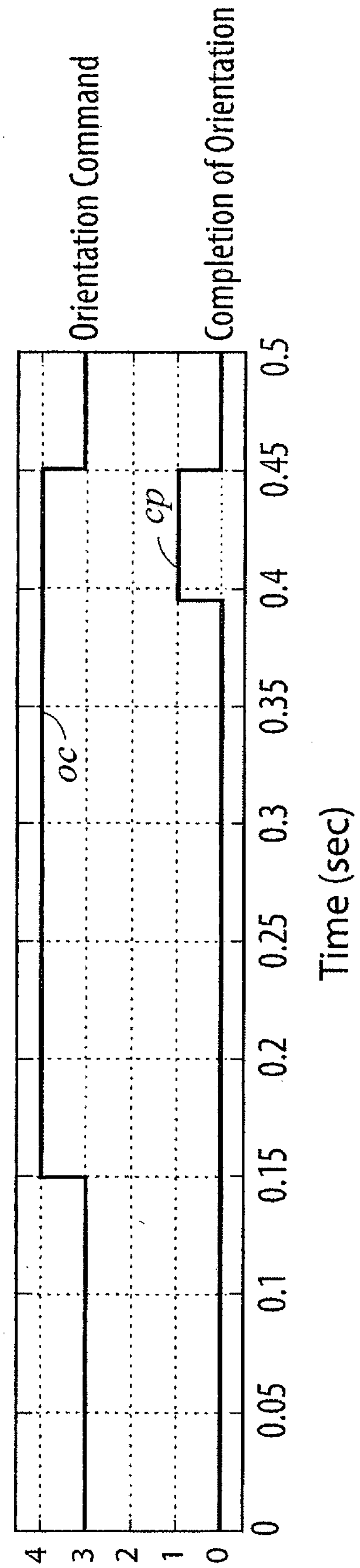


Fig.10B

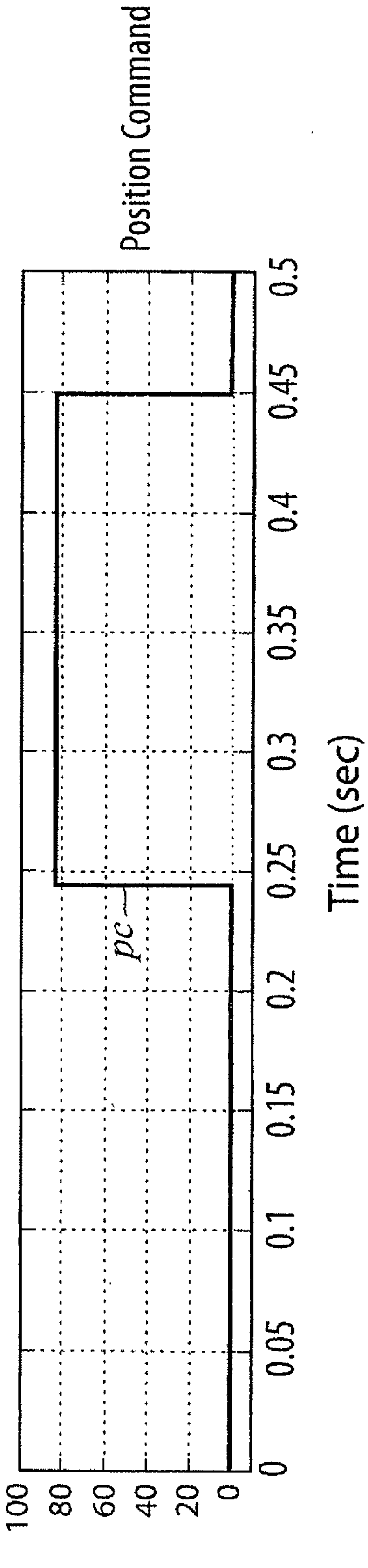

Fig.10C

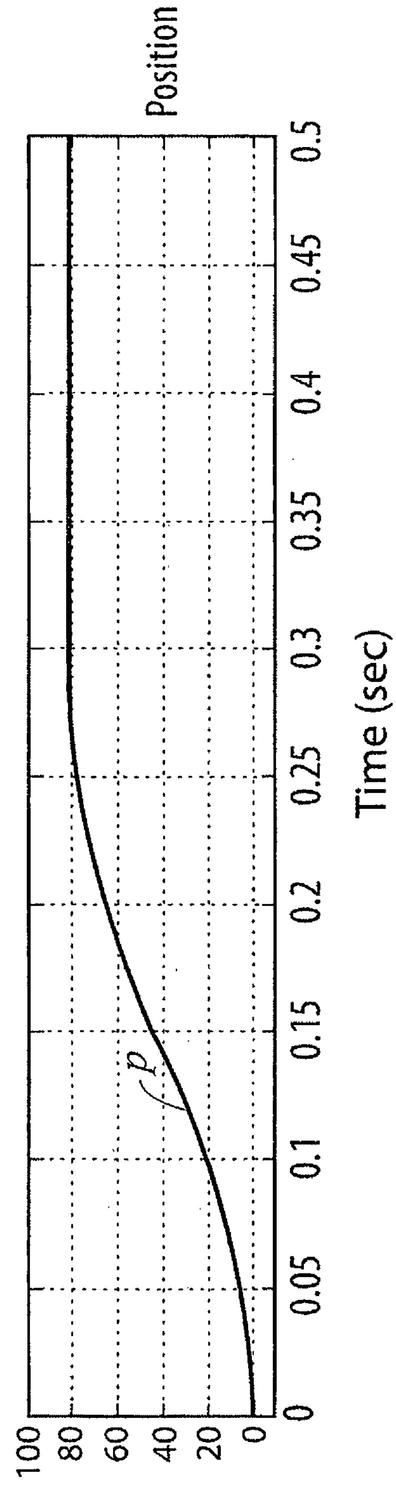


Fig.10D

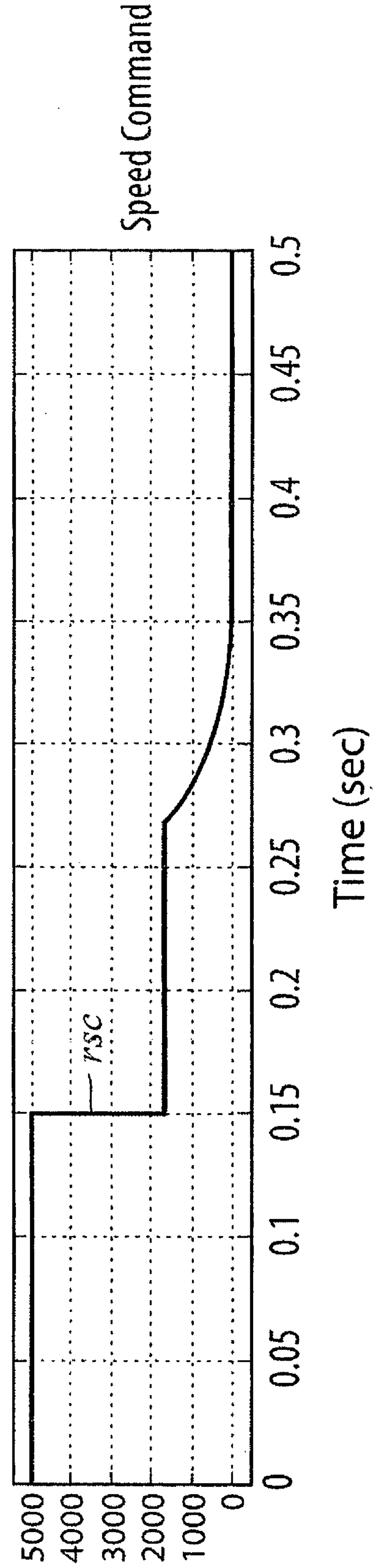

Fig. 10E

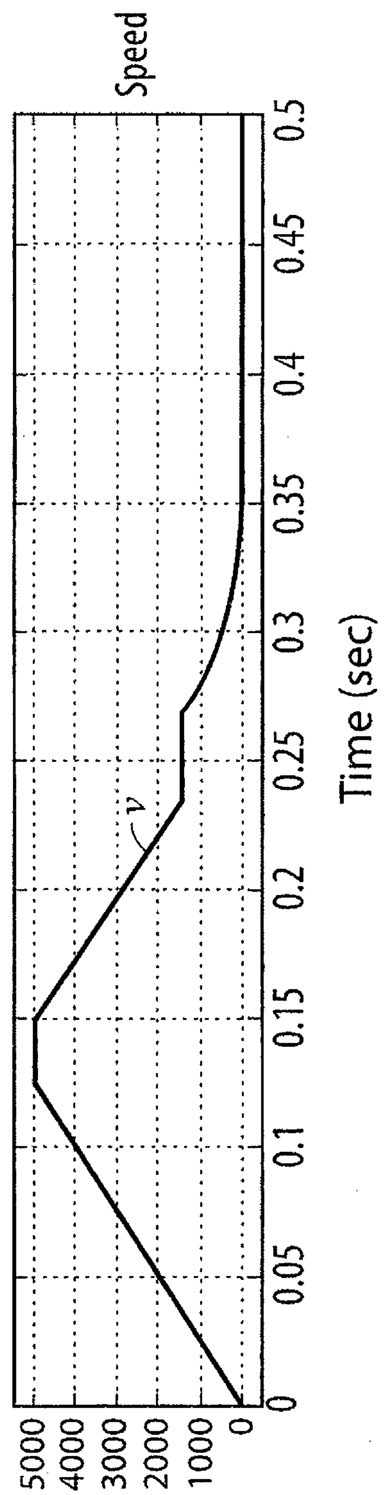


Fig. 10F

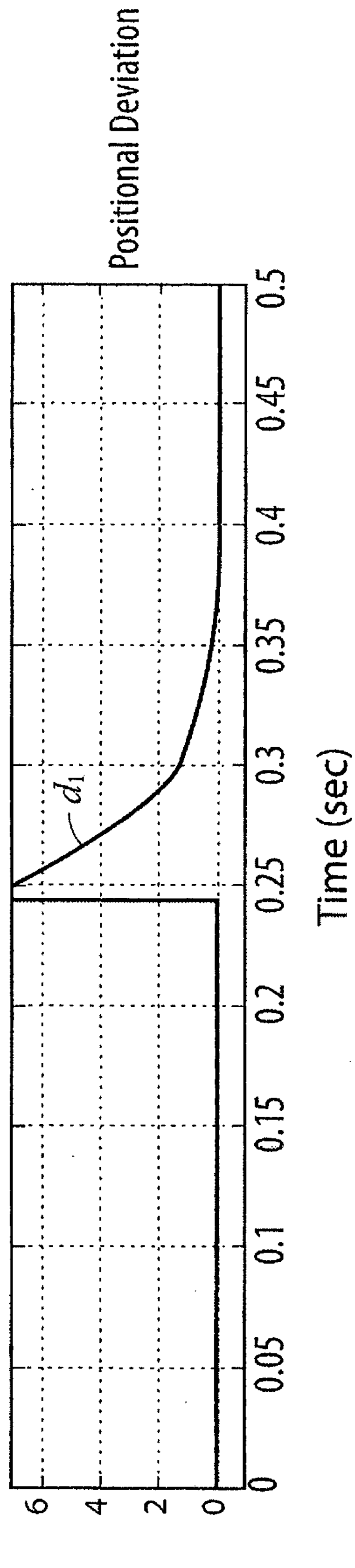

Fig.11

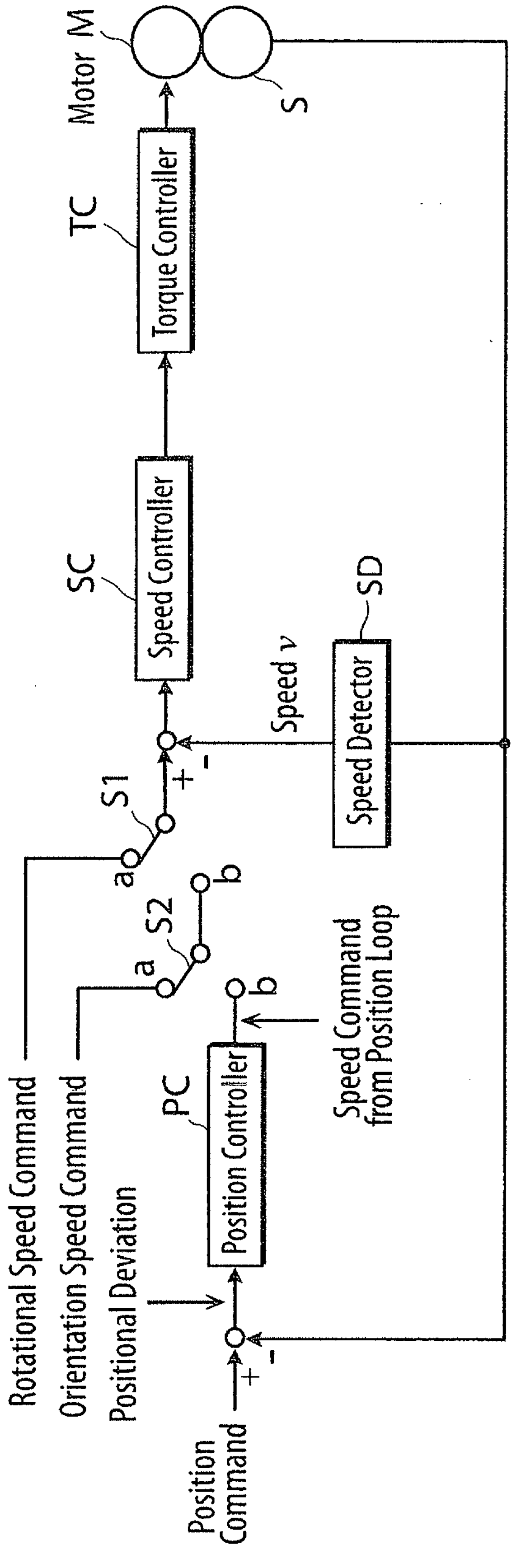
Motor M
S
TC
Torque Controller
SC
Speed Controller
SD
Speed Detector
Speed v
S1
a
+
-
S2
a
b
b
Rotational Speed Command
Orientation Speed Command
Positional Deviation
PC
Position Controller
Speed Command from Position Loop
Position Command
+
-

Fig. 12

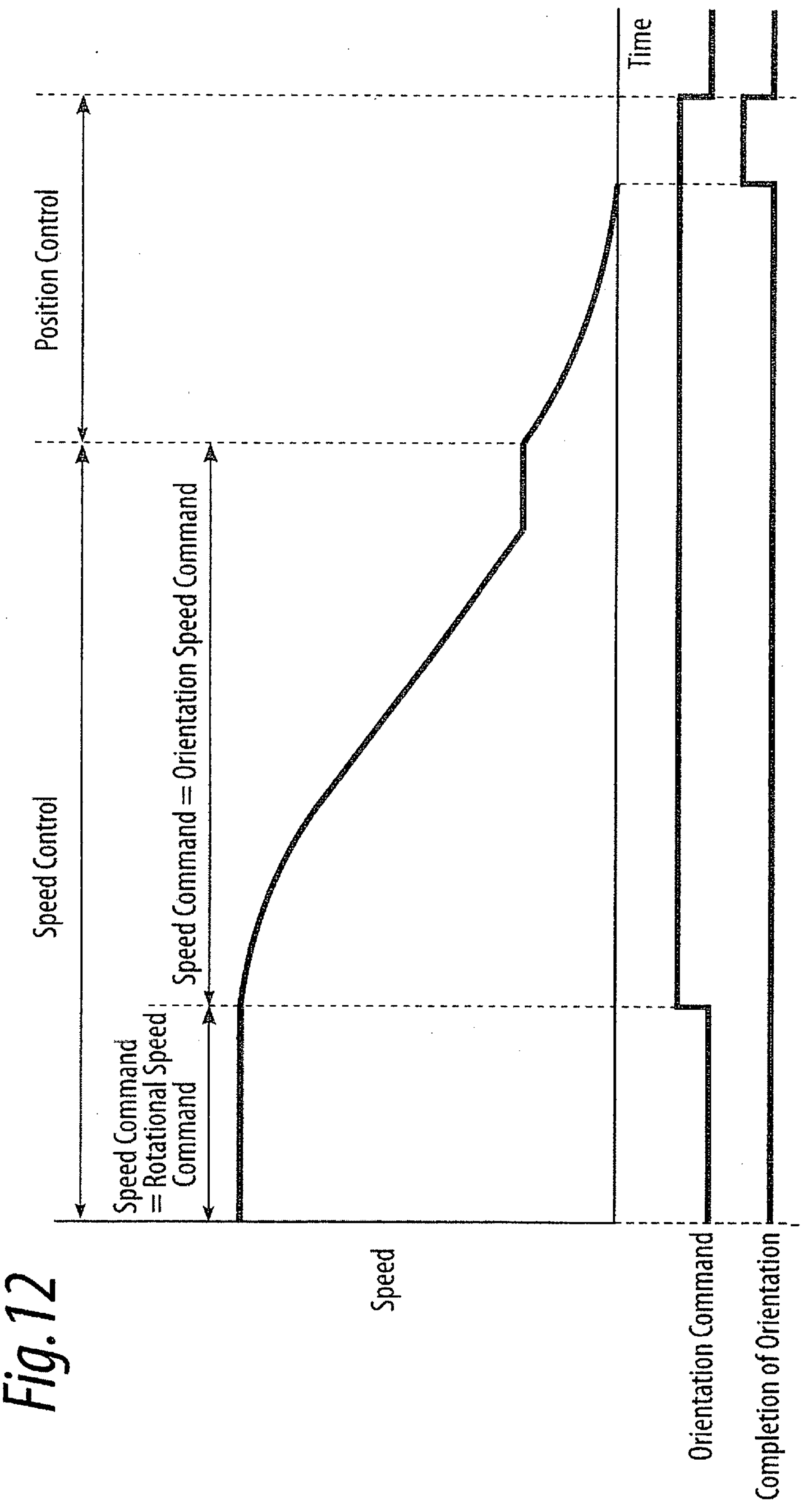
Speed Control
Position Control
Speed Command = Rotational Speed Command
Speed Command = Orientation Speed Command
Speed
Time
Orientation Command
Completion of Orientation

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007156699 A
- WO 2005349266 A
- US 4398138 A